Europäisches Patentamt

European Patent Office

Office européen des brevets

(19)

(11) EP 0 690 377 B1

(12) EUROPEAN PATENT SPECIFICATION

(45) Date of publication and mention
of the grant of the patent:
08.12.1999 Bulletin 1999/49

(51) Int Cl.6: **G06F 9/46**, G06T 7/20,
H04N 7/26

(21) Application number: 95114934.3

(22) Date of filing: 17.02.1989

(54) **Digital signal processing apparatus**

Digitalsignalverarbeitungseinheit

Processeur de signaux numériques

(84) Designated Contracting States:
DE FR GB IT

(30) Priority: 19.02.1988 JP 3792188
18.03.1988 JP 6339588
26.11.1988 JP 29872288
26.11.1988 JP 29872388

(43) Date of publication of application:
03.01.1996 Bulletin 1996/01

(62) Document number(s) of the earlier application(s) in
accordance with Art. 76 EPC:
89102717.9 / 0 329 151

(73) Proprietor: **MITSUBISHI DENKI KABUSHIKI
KAISHA**
Tokyo 100 (JP)

(72) Inventors:
• **Murakami, Tokumichi, c/o Mitsubishi Denki K. K.
Kamakura-shi, Kanagawa (JP)**
• **Kamizawa, Koh, c/o Mitsubishi Denki K. K.
Kamakura-shi, Kanagawa (JP)**
• **Kinjo, Naoto, c/o Mitsubishi Denki K. K.
Kamakura-shi, Kanagawa (JP)**

(74) Representative: **Eisenführ, Speiser & Partner
Martinistrasse 24
28195 Bremen (DE)**

(56) References cited:
• **COMPCON FALL 77, 6 September 1977,
WASHINGTON D.C. , USA pages 418 - 422 MOTT
'Multimicroprocessor with queue memories'**
• **IEEE JOURNAL OF SOLID-STATE CIRCUITS,
vol.SC-21, no.5, October 1986, NEW YORK US
pages 750 - 763 VAN WIJK 'A 2 um CMOS 8-MIPS
digital signal processor with parallel processing
capability'**
• **PROCEEDINGS OF THE 1985 INTERNATIONAL
CONFERENCE ON PARALLEL PROCESSING, 20
August 1985, PENNSYLVANIA, USA pages 649 -
651 CORAOR 'A reconfigurable multiprocessor'**
• **PROCEEDINGS ICASSP 87, vol.4, 6 April 1987,
DALLAS, TEXAS, USA pages 1899 - 1902
MCGRATH 'A WE-DSP32 based , low-cost, high
performance, synchronuous multiprocessor for
cyclo-static implementations'**

**Description**

BACKGROUND OF THE INVENTION

Field of the Invention

The present invention relates to a digital signal processing apparatus which performs computational processes for digital signals.

Description of the Prior Art

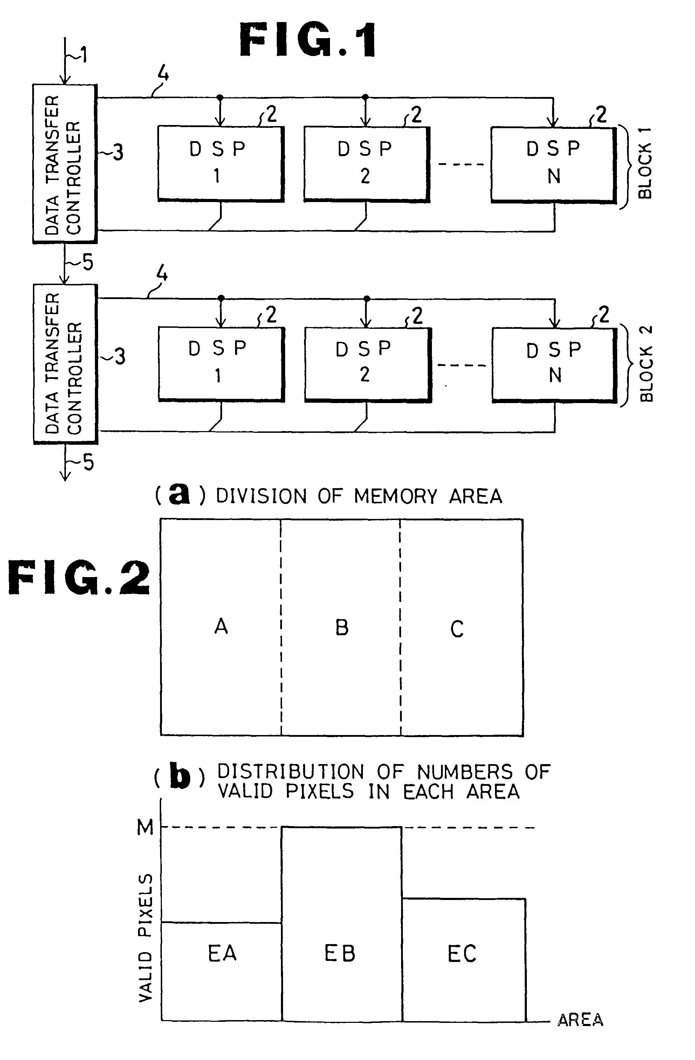

Fig. 1 shows the multiprocessor system described in article entitled "A Real Time Video Signal Processor Suitable for Motion Picture Coding Applications", IEEE, GLOBCOM '87, p. 453. In Fig. 1, input data 1 is received by a data transfer controller 3, and thereafter data 4 are transferred selectively to digital signal processors 2, i.e. DSP-1 through DSP-N, in block-1. After being processed by the respective DSPs in block-1, resultant data 5 is transferred to block-2 and processed by respective DSPs for the next processing step.

Fig. 2(a) shows divided memory areas of the DSPs. For the simplicity of explanation, shown here is an example of parallel processing using three DSPs 2, to which process areas A, B and C are assigned evenly.

In the inter-frame image coding system and the like, it is a general convention to employ the conditional pixel supplementary process in which only portions having at least a certain difference between the input frame and previous frame are coded and previous frame data is used for the remaining portions. Accordingly, the volume of computation needed for the process differs depending on the valid pixel rate even though the number of pixels in the process area is constant. The volume of computation or computation time needed is proportional to the valid pixel rate.

In the inter-frame image coding system or the like, assuming that the number of valid pixels is shared by all DSPs to have a distribution EA, EB and EC as shown in Fig. 2(b), the computation time needed for one block of parallel DSP configuration is determined from the process time of the DSP which works for the area B with the largest volume of process M, and the remaining DSPs which have finished the areas A and C earlier have idle time.

The conventional digital signal processing apparatus arranged as described above has its overall process time determined from the longest process time among DSPs when the density of information, such as the valid pixel rate, within a frame is uneven and the distribution of information varies with time, resulting in a degraded process efficiency per DSP unit.

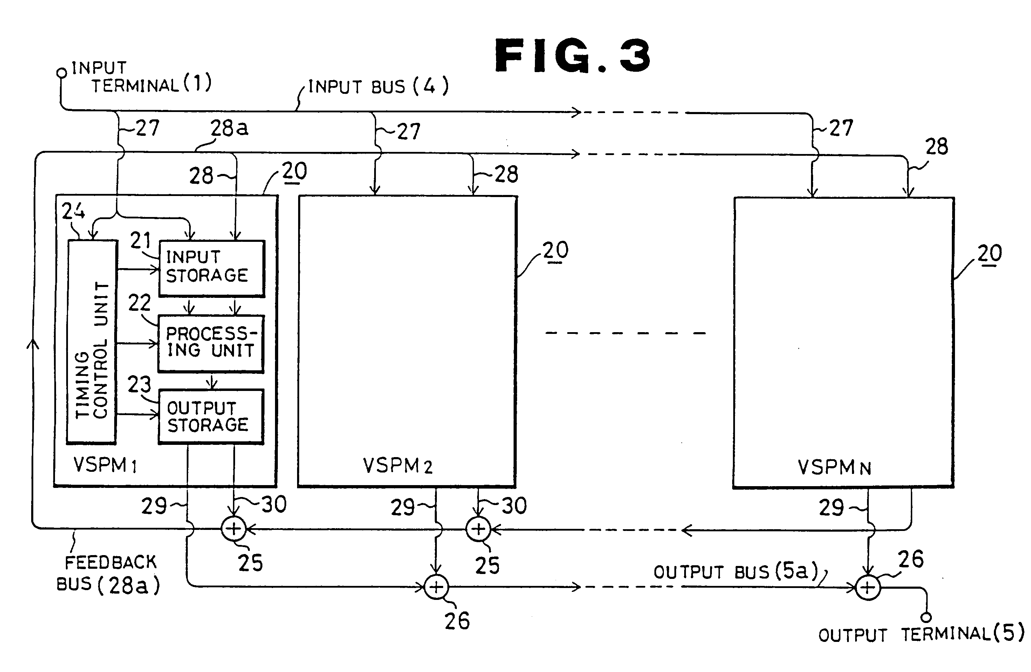

Fig. 3 is a diagram showing, as an example, the arrangement of other digital signal processing apparatus disclosed in an article entitled "Realtime Video Signal Processor Module", in the proceeding of ICASSP '87, pp. 1961 - 1964, April 1987, Dallas, U.S.A. In the figure, indicated by 1 is an input terminal, 4 is an input bus for distributing input data on the input terminal 1, 28a is a feedback bus for distributing the result of previous process, and 20 are signal processing modules each including an input storage 21, a processing unit 22, an output storage 23 and a timing control unit 24. Indicated by 25 are wired-OR circuits through which feedback data on output ports 30 are placed on the feedback bus 28a, 26 are wired-OR circuits through which output data on output ports 29 are delivered to the output terminal 5 over the output bus 5a, 27 are input ports for the input data to the signal processing module 20, and 28 are input ports for the feedback data to the signal processing module 20.

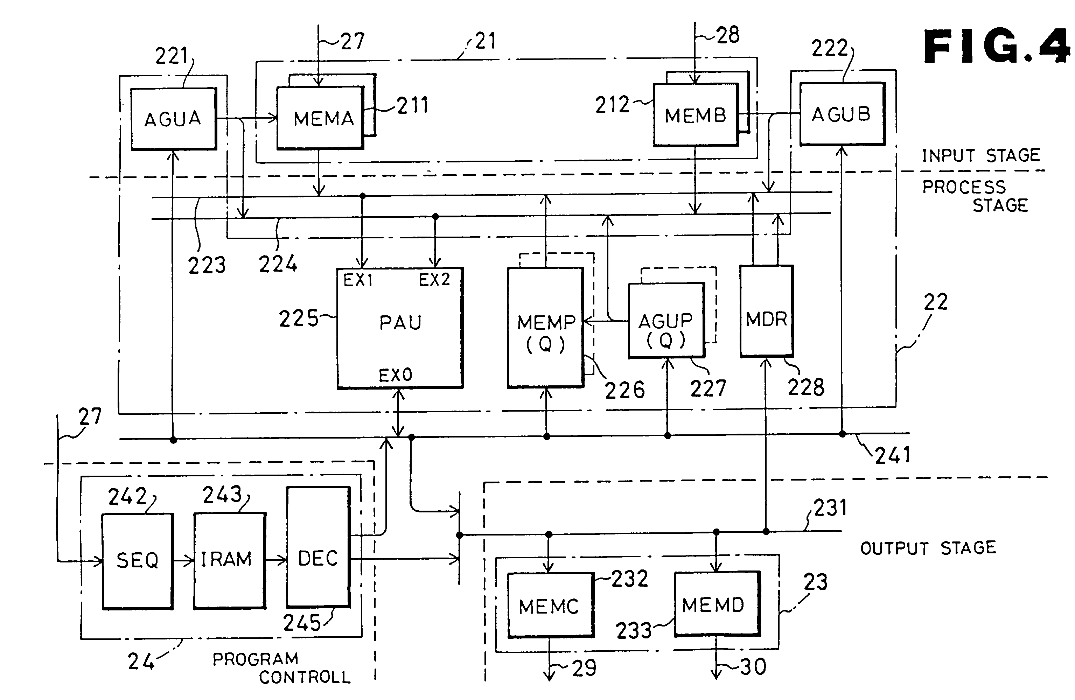

Fig. 4 is a block diagram showing in more detail one of the signal processing module in Fig. 3. In the figure, indicated by 221 is an address generator (AGU A), 211 is an input dual memory (MEM A) which receives data on the input port 27 over the input bus 4, 212 is an input dual memory (MEM B) which receives data on the feedback bus 28a by way of the input port 28, 222 is an address generator (AGU B), 223 is an X-bus, 224 is a Y-bus, and 225 is a pipeline arithmetic unit (PAU) having its input terminal EX1 connected to the X-bus 223 and another input terminal EX2 connected to the Y-bus 224. Indicated by 226 is a data memory [MEM P(Q)] having its output connected to the X-bus 223, 227 is an address generator [AGU P(Q)] having its output connected to the Y-bus 224 and data memory 226, 228 is a mode register (MDR) having its output connected to the X-bus 223 and Y-bus 224, and 241 is a Z-bus connected to the inputs of the address generators 221, 222 and 227, pipeline arithmetic unit 225 and data memory 226. Indicated by 242 is a sequencer (SEQ), 243 is an instruction memory (IRAM) connected to the output of the sequencer 242, and 245 is a decoder (DEC) connected to the output of the instruction memory 243, with the output of the decoder 245 being connected to the Z-bus 241 and output bus 231. The output bus 231 is connected to the input of the mode register 228 and the Z-bus 241. Indicated by 232 is an FIFO memory (MEM C) connected to the output bus 231, 233 is an FIFO (MEM D) connected to the output bus 231, 29 is an output port of the FIFO memory 232, and 30 is an output port of the FIFO memory 233.

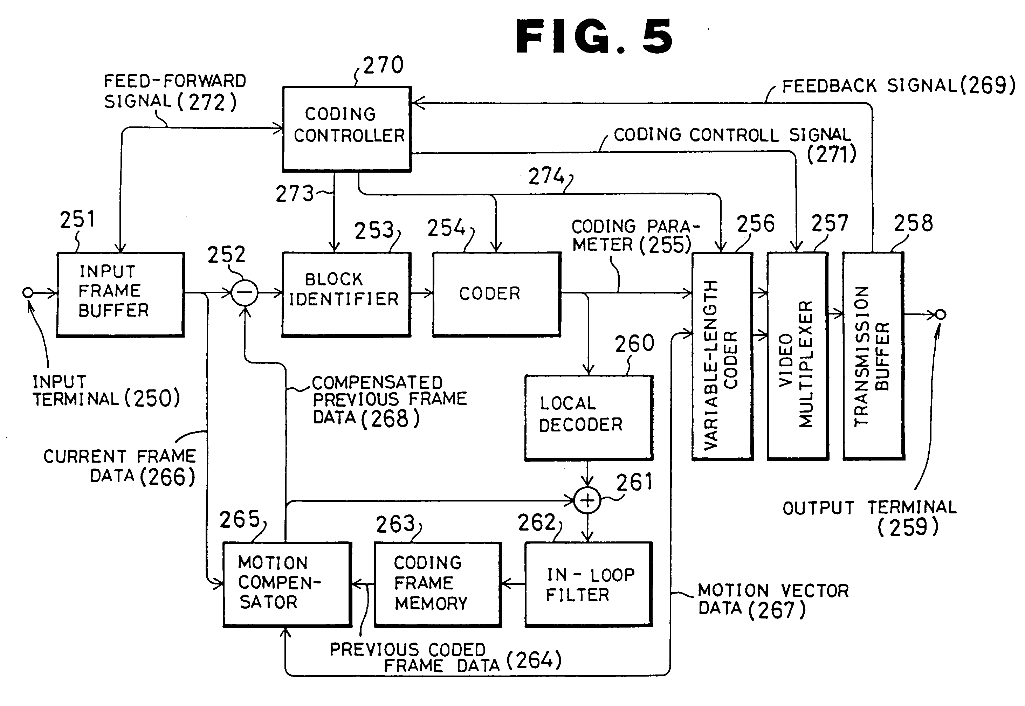

Fig. 5 is a diagram showing, as an example, the algorithm of a typical high-efficiency coder for a moving image. In the figure, indicated by 250 is an input terminal for the input video signal, 251 is an input frame buffer having at least a 1-frame capacity and having the simultaneous read-write ability, 252 is an inter-frame subtracter for evaluating the difference, 253 is a block identifier, 254 is a coder, 255 is a coding parameter produced by the coder 254, 256 is a variable-length coder, 257 is a video multiplexer, 258 is a transmission buffer memory, and 259 is an output terminal for the coded data. Connected in cascade between the input terminal 250 and output terminal 259 are the above-mentioned functional blocks 251 - 254 and 256 - 258. Further indicated by 260 is a local decoder which receives the coding parameter 255, 261 is an inter frame adder, 262 is an in-loop filter, 263 is a coding frame memory, 264 is previous coded frame data, 265 is a motion compensator, 266 is current frame data fed from the input frame buffer 251 to the motion compensator 265, 267 is motion vector data, 268 is compensated previous frame data fed from the motion compensator 265 to the inter-frame subtracter 252 and inter-frame adder 261, 269 is a feedback signal, and 270 is a coding controller which provides coding control information for the video multiplexer 257, a feed-forward signal to the input frame buffer 251, a block identification control signal 273 to the block identifier 253, and a coding control signal 274 to the variable-length coder 256.

Next, the operation of the conventional digital signal processing apparatus will be described in connection with Fig. 3. This apparatus is intended for moving image processing and is based on the division parallel processing system in which a frame is divided into small frames and a signal processing module 20 is assigned to each of the divided frame areas.

Initially, each signal processing module 20 operates on the autonomous basis by expending one video frame time to fetch a divided frame area assigned to it among the input data transferred frame-wise in raster scanning over the input bus 4 and store the data in the input storage 21. At the same time, if the process result of the previous frame is needed for the current process, it operates by expending one video frame time to fetch data of the assigned area of the frame in the feedback data from the input port 28 over the feedback bus 28a and stores the data in the input storage 21.

Upon expiration of one video frame time, the processing unit 22 performs the prescribed signal processing for the input data and feedback data stored in the input storage 21, and stores the result temporarily in the output storage 23. The feedback data led out of the output storage 23 through the output port 30 is timed for synchronization with other signal processing modules 20 and, by being merged into all feedback data by the wired-OR circuit 25, placed on the feedback bus 28a. Similarly, the output data led out of the output storage 23 through the output port 29 is timed for synchronization with other signal processing modules 20 and, by being merged into all output data by the wired-OR circuit 26, delivered to the output terminal 5 over the output bus 5a.

Divided frame areas processed individually by the signal processing modules 20 are combined back to a video frame. Therefore, parallel processing of area divided type is realized. For reason as described above, it is necessary for all signal processing modules 20 to have their process commencement in complete synchronism with one another. On this account, the timing control unit 24 provides all sections of system with the timing of data input/output and process commencement in synchronism with the video frame timing which is the synchronization reference point.

Next, the operation of one signal processing module 20 will be briefed in connection with Fig. 4. Among a video frame entered frame-wise through the input port 27 in synchronism with the video frame sync signal, data of the assigned area is stored in the input dual memory 211. At the same time, among the coded previous frame data entered through the input port 28, the portion of the assigned area and its peripheral data are stored in the input dual memory 212.

The input dual memories 211 and 212 is made up of a two-sided memory device in the same structure on both sides and it operates such that while one side is written data, the other side is connected to the X-bus 223 and Y-bus 224 for reading for the coding process by the pipeline arithmetic unit 225. The read/write sides of the input dual memories 211 and 212 are switched by the above-mentioned video frame sync signal so that input data of assigned areas on the input ports 27 and 28 are entered frame-wise uninterruptedly.

The data read out to the X-bus 223 and Y-bus 224 are those stored at data memory addresses indicated to the input dual memories 211 and 212 by the address generators 221 and 222 that are controlled by the signals provided by the decoder 245 by decoding a 80-bit length horizon-type microcodes read out in accordance with the address of the command memory 243 indicated by the sequencer 242. The data placed on the X-bus 223 and Y-bus 224 are entered in parallel to the pipeline arithmetic unit 225, which implements a series of signal processing including coding and local decoding and outputs the result to the Z-bus 241. Among the process outputs placed on the Z-bus, the coded output is stored in the FIFO memory 232 and the local decoded output is stored in the FIFO memory 233 by way of the output bus 231.

The FIFO memories 232 and 233 are buffer memories of FIFO configuration. Feedback data consisting of the output data and local decoded data are read out of the output ports 29 and 30 at the read control timing for the assigned area produced from the video frame signal, and a piece of video frame local decoded data and coded output data in compliance with the scanning order are produced.

The data memory 226 which is controlled by the output of the address generator 227 is used by a work memory which is necessary for the process of the pipeline arithmetic unit 225 and a table which stores constants. The mode register 228 consists of a register file including registers for loading immediate values from the decoder 245.

This digital signal processing apparatus is principally based on the foregoing area division parallel processing, and is intended such that each signal processing module 20 deals with a divided frame area independently on a realtime basis. When the digital signal processing apparatus is intended for the achievement of a coder as shown in Fig. 5, only portions excluding the variable-length coder 256, video multiplexer 257, transmission buffer 258 and coding controller 270 can be realized. Namely, it is not suitable for a continuous process in one video frame, and is limited to the interframe coding loop process ranging from the input frame buffer 251 to the block identifier 253, coder 254, local decoder 260, coding frame memory 263, and to the motion compensator 265 useful for data completely divisible within a frame.

Since each signal processing module 20 implements the same process for each frame, the processing program stored in the instruction memory 243 can be a single program. When a frame is divided into M areas (M is an integer greater than or equal to 1), the number of process cycles Nc per pixel which can be dealt with on a realtime basis by one signal processing module 20 is given by the following calculation.

$$Nc = Mc \cdot Tf/Mp \cdot Np \qquad (clocks/pixel)$$

where Mc is the frequency of machine cycle (Hz), Tf is the frame period (sec), Mp is the number of horizontal pixels in the assigned area, and Np is the number of vertical pixels in the assigned area.

On this account, if a frame is divided into four areas, for example, each having the assignment of a signal processing module 20, the number of process cycles Nc is increased by four fold, and it becomes possible for the video signal processing, which is required to be very fast, to be dealt with on a realtime basis by an increased number of relatively slow signal processing modules 20.

The conventional digital signal processing apparatus arranged as described above have the following problems for processing video signals.

(a) For the achievement of very fast processing, a frame must be divided into numerous small areas, however, certain signal process algorithms do not allow independent processes for areas below a certain minimal division size. Therefore, realtime processing can not be achieved by increasing the parallelism.

(b) Because of a fixed distribution of load to signal processing modules, the process time must be set to meet the longest one when each signal processing module has a different process time. Therefore, the system has an unnecessarily increased parallelism relative to the processing capacity.

(c) Data input and data processing each take one frame time, and data input and output each need a 1-frame buffer memory, resulting in a longer time lag and an increased memory capacity. Therefore, the system involves a significant loop delay in feedback control and the like, and it is difficult to realize the coding controller 270 in Fig. 5 for example.

(d) Since the system is intended for a complete parallel processing, it cannot perform such a process as scanning the entirety of a same frame horizontally.

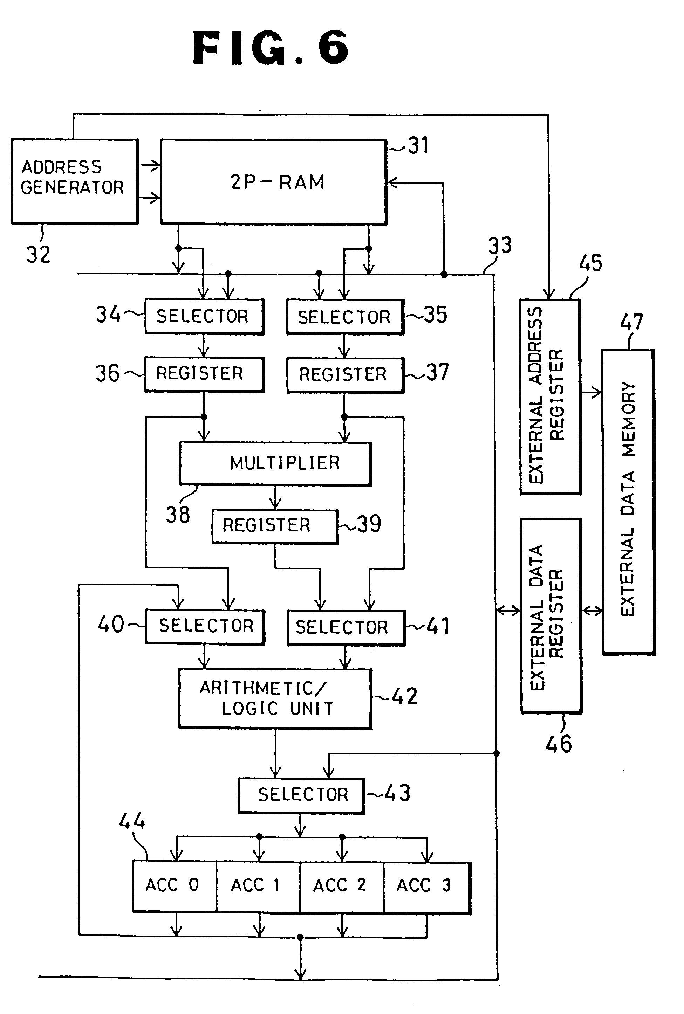

Fig. 6 is a block diagram of the conventional digital signal processing system disclosed in the proceeding (No. S10-1) of the 1986 annual convention of the communication department of The Institute of Electronics and Communication Engineers of Japan. In the figure, indicated by 31 is a dual-port internal data memory (will be termed 2P-RAM) capable of reading and writing two sets of data simultaneously, 32 is an address generator which calculates the address of read data or write data, 33 is a data bus used for the internal transfer of data related to computation, 34 and 35 are selectors which select data in the 2P-RAM 31, 36 is a register which holds computation data selected by the selector 34, 35 is a register which holds computation data selected by the selector 35, 38 is a multiplier, 39 is a register which holds the output of the multiplier 38, 40 is a selector which selects the output of the register 36 or accumulators (ACC0 - ACC3) 44, 41 is a selector which selects the output of the registers 39 or 37, 42 is an arithmetic/logic unit which performs computations for the outputs of the selectors 40 and 41, and 43 is a selector which selects the output of the arithmetic/logic unit 42 or data in an external data register 46. The accumulators 44 are used to hold the output of the arithmetic/logic unit 42 for cumulative computations. The external data register 46 is to hold data from an external data memory 47. Indicated by 45 is an external address register which holds address data provided by the address generator 32 and transfers it to the external data memory 47.

Next, the operation will be described. This signal processing system based on a digital signal processor performs command fetching and decoding for the preset microprogram, data reading, computation, and computation result writing, in a parallel pipeline processing mode. The following describes the operation of 3-input-1-output computation.

The arithmetic/logic unit, multiplier, address generator, data memories and selectors are controlled in the microcommand mode.

Arithmetic operations for two inputs, including addition, subtraction, maximum evaluation, minimum evaluation, etc. are expressed generically by $a \oplus b$, and a multiplication operation for two inputs is expressed generically by a x b, where a and b are independent data.

The arithmetic operations and multiplication are combined to form 3-input-1-output operations, and they are defined by the following expressions.

$$Z_i^1 = (ai \oplus bi) \text{ x } ci \tag{1}$$

$$Z_i^2 = (ai \text{ x } bi) \oplus ci \tag{2}$$

where i = 1 to N, and ai, bi and ci are sets of independent data stored in the 2P-RAM 31.

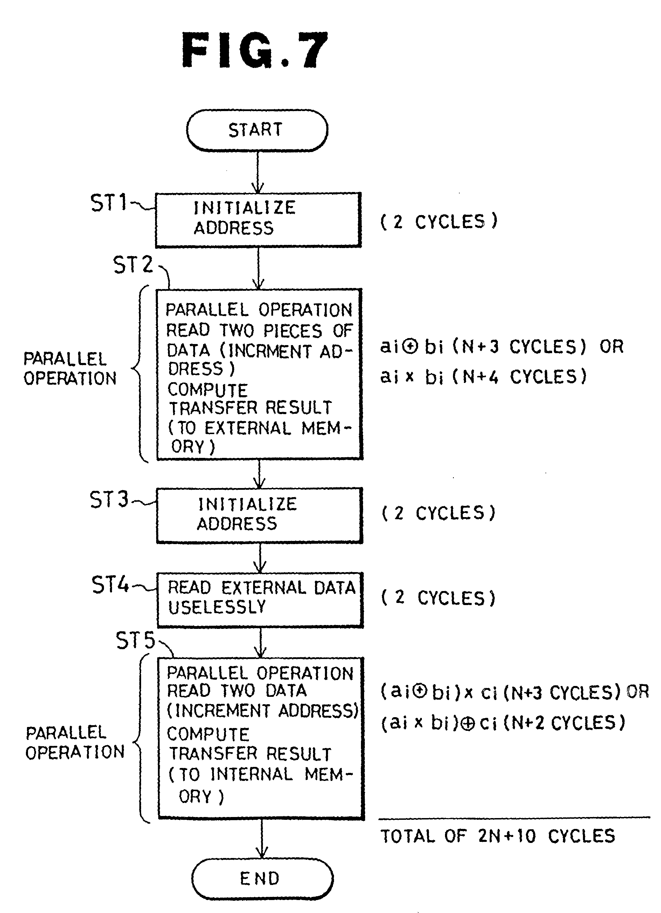

Fig. 7 shows the sequence of process for implementing the 3-input operation of the form of expression (1) by the digital signal processing system, for example, shown in Fig. 6.

The data address generator 32 sets up the starting addresses for two data sets A and B, and selects the simple incremental mode. Then the two data sets A and B are loaded through the selectors 34 and 35 into the registers 36 and 37. The selectors 40 and 41 select the registers 36 and 37, respectively, so that the arithmetic/logic unit 42 implements the arithmetic operation ai ⊕ bi. The selector 43 selects the arithmetic/logic unit 42 to hold the operation result temporarily in one of accumulators (ACC0 - ACC3) 44, and the resultant data is sent over the data bus 33 and through the external register 46 and stored in the external memory 47, which addressing mode is the simple incremental mode because of it being linked to one of addresses for the 2P-RAM 31 in the address generator 32.

In the subsequent step ST3, the data address generator 32 sets up the starting addresses of the data set C and data set ai⊕bi, and ci data is read out of the 2P-RAM 31 to the register 36. The selector 35 selects the data bus to load the data of ai⊕bi in the external memory 47 into the register 37. In this case, in order to have a coincident timing of reading for the data set C and data set ai⊕bi, step ST4 needs to expend two cycles of useless command reading for the external memory in advance.

The two sets of data are rendered multiplication by the multiplier 38 in step ST5, and the result is stored in the register 39. In the next cycle, the resultant data is passed through the arithmetic/logic unit 42 and, after being held temporarily in one of the accumulators (ACC0 - - ACC3) 44, transferred over the data bus 33 to the 2P-RAM 31.

These operations are carried out in parallel on the basis of the pipeline process, and the operations from the reading of 2P-RAM 31 until the storing of the process result in the external memory 47 for N pieces of data sets will take N + 3 machine cycles in the case of an arithmetic operation.

The steps of operations are listed in the following Table 1 and Table 2. Table 1 is for the operation of ai⊕bi and the transfer of the result to the external memory 47, and Table 2 is for the reading the resultant ai⊕bi from the external memory 47, the operation of (ai⊕bi)·ci , and the transfer of the result to the 2P-RAM. In both tables, symbol "x" represents an indefinite value. Storing in the external data register 46 completes in machine cycle N + 3 in both tables, and the external data register 46 is read uselessly in machine cycle 0 (two machine cycles) in Table 2.

Table 1

| Machine cycle | Register 36 | Register 37 | Register 39 | a c c x | External data register 46 |
|---|---|---|---|---|---|
| 1 | $a_1$ | $b_1$ | x | x | x |
| 2 | $a_2$ | $b_2$ | $a_1 \times b_1$ | $a_1 \oplus b_1$ | x |
| 3 | $a_3$ | $b_3$ | $a_2 \times b_2$ | $a_2 \oplus b_2$ | $a_1 \oplus b_1$ |
| 4 | $a_4$ | $b_4$ | $a_3 \times b_3$ | $a_3 \oplus b_3$ | $a_2 \oplus b_2$ |
| $\vdots$ | $\vdots$ | $\vdots$ | $\vdots$ | $\vdots$ | $\vdots$ |
| N | $a_N$ | $b_N$ | $a_{N-1} \times b_{N-1}$ | $a_{N-1} \oplus b_{N-1}$ | $a_{N-1} \oplus b_{N-2}$ |
| N + 1 | x | x | $a_N \times b_N$ | $a_N \oplus b_N$ | $a_{N-1} \oplus b_{N-1}$ |
| N + 2 | x | x | x | x | $a_N \oplus b_N$ |
| N + 3 | x | x | x | x | x |

EP 0 690 377 B1

Table 2

| Machine cycle | Register 36 | Register 37 | Register 39 | acc | External data register 46 |
|---|---|---|---|---|---|
| 0 | x | x | x | x | $a_1 \oplus b_1$ |
| 1 | $a_1 \oplus b_1$ | $c_1$ | x | | $a_2 \oplus b_2$ |
| 2 | $a_2 \oplus b_2$ | $c_2$ | $(a_1 \oplus b_1) \times c_1$ | | $a_3 \oplus b_3$ |
| 3 | $a_3 \oplus b_3$ | $c_3$ | $(a_2 \oplus b_2) \times c_2$ | | $a_4 \oplus b_4$ |
| ... | ... | ... | ... | | ... |
| N | $a_N \oplus b_N$ | $c_N$ | $(a_{N-1} \oplus b_{N-1}) \times c_{N-1}$ | | x |
| N + 1 | x | x | $(a_N \oplus b_N) \times c_N$ | | x |
| N + 2 | x | x | x | | x |
| N + 3 | x | x | x | x | x |

Next, after two useless reading cycles of the external memory 47 for timing purposes, multiplication is carried out for N pieces of data sets and the results are stored in the 2P-RAM 31. These operations take N + 3 machine cycles, which are added by two command cycles for address initialization, and a total of 2N + 10 cycles are expended. An operation of expression (2) also takes 2N + 10 cycles. Accordingly, it will be appreciated that if a 3-input-1-output operation is conducted for N pieces data sets using a processor with the ability of 2-input operation at most, it will take about 2N machine cycles (provided that N is sufficiently large).

The following describes the cumulative operation for the results of the foregoing 3-input-1-output computation.

$$S = \sum_{i=1}^{N} (a_i \oplus b_i) \times c_i \qquad \ldots (3)$$

$$S = \sum_{i=1}^{N} (a_i \times b_i) \oplus c_i \qquad \ldots (4)$$

In the case of expression (3), the multiplication result for $a_i \oplus b_i$ and $c_i$ (output of register 39) and the intermediate cumulative value are entered to the arithmetic/logic unit 42, and the result of summation is entered back to the same accumulator 44 through the selector 43. Thereby, the process takes 2N + 10 cycles unchanged.

In the case of expression (4), the data sets $(a_i \times b_i) \oplus c_i$ which have been stored temporarily in the 2P-RAM 31 are read out sequentially and summed by the arithmetic/logic unit 42, and therefore the process needs another N cycles, resulting in a total of 3N + 10 cycles.

The conventional digital signal processing system is formed as described above, and therefore for a 3-input-1-output operation of three independent data sets, it performs two times of 2-input-1-output operation. In addition, the process time is further extended for address control, memory transfer and other processes.

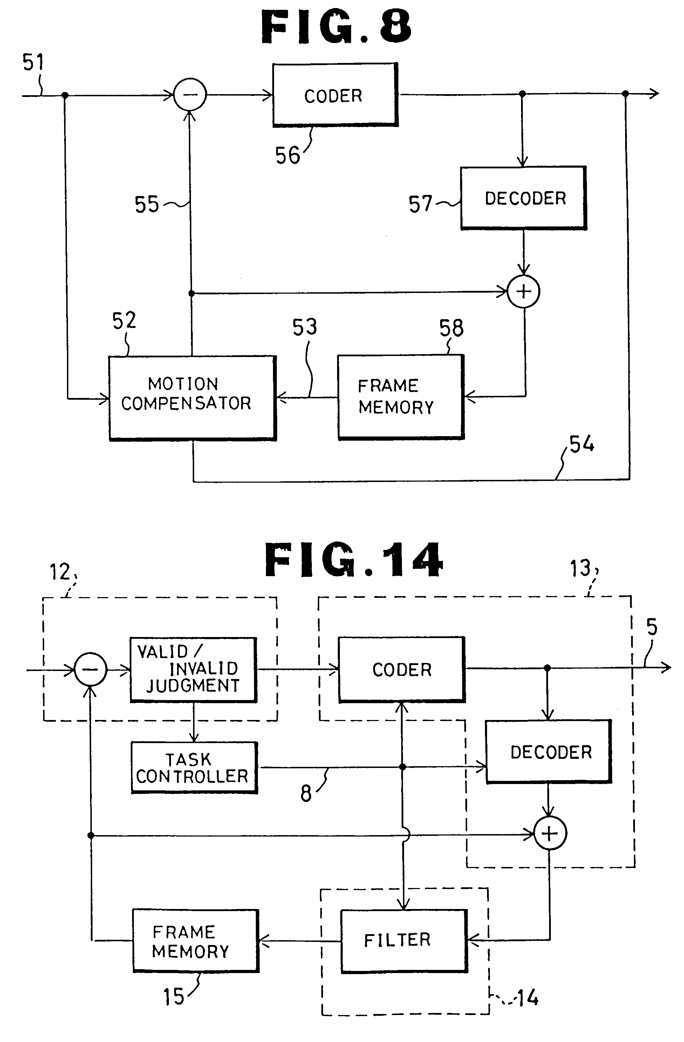

Fig. 8 is a diagram showing in brief the image coding transmitter which implements the conventional motion compensatory operation method disclosed in an article entitled "Dynamic Multistage Vector Quantization for Images", journal of The Institute of Electronics and Communication Engineers of Japan, Vol. J68-B, No. 1, pp. 68 - 76, Jan. 1985. In the figure, indicated by 1 is an input signal of image data formed of a plurality of consecutive frames on the time axis, 52 is a motion compensator which produces a prediction signal on the basis of the resemblance computation of correlation between the current frame represented by the input signal 1 and the previous frame represented by a previous frame signal 53 which is the previous reduced signal 1, 54 is motion vector information provided by the motion compensator 52 indicative of the position of a prediction signal block, 55 is a prediction signal produced by the motion compensator 52, 56 is a coder which codes the difference between the input signal 1 and prediction signal 56, 57 is a decoder which decodes the signal coded by the coder 56, and 58 is a frame memory which stores data reproduced through the summation of the signal from the decoder 57 and the signal from the motion compensator 52.

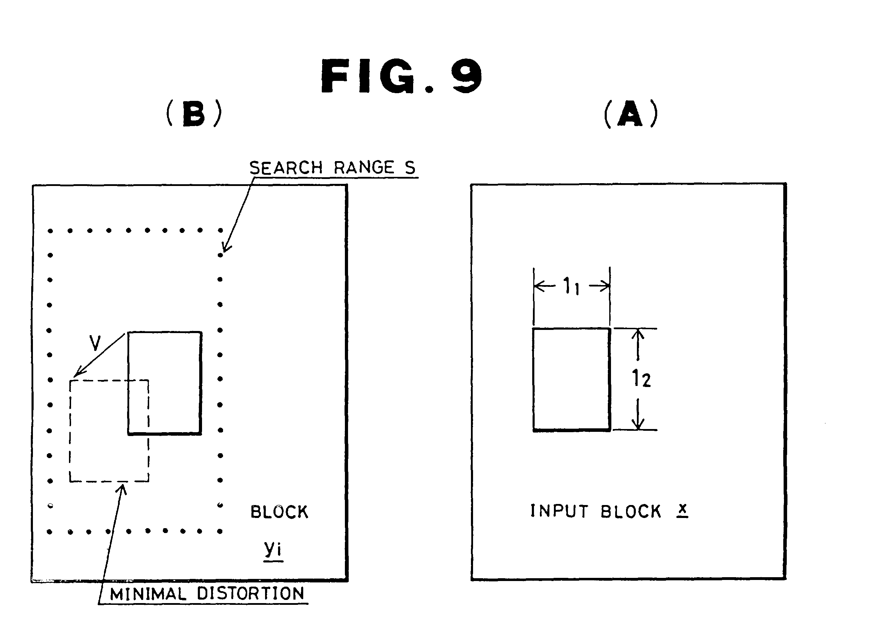

The performance of the foregoing arrangement will be described in connection with Fig. 9. The motion compensation process is to calculate for the input signal 1 the amount of distortion between a 11-by-12 block located in a specific position in the current frame shown in Fig. 9(A) and M pieces of blocks in the search range S in the previous frame shown in Fig. 9(B) to evaluate the position of the block y providing a minimal distortion relative to the position of the input block, i.e., motion vector V, and to recognize the signal of the minimal distortion block as a prediction signal.

The number of motion vectors V under search within the search range S in the given frame is assumed to be M (an integer greater than 1). The amount of distortion of the position of a specific motion vector V between the previous frame blocks and the current input block is calculated as a sum of absolute values of differences as follows.

$$d_i = \sum_{h=1}^{K} |y_{ih} - x_h| \qquad \ldots (5)$$

where input vectors x = {x1, x2, ..., xk}, search object blocks yi = {yi1, yi2, ..., yik}, i = 1, 2, ..., M, and M and K are fixed values. The motion vector V is evaluated as follows.

$$V = Vi \{min\ di\ |\ i = 1, 2, ..., M\} \tag{6}$$

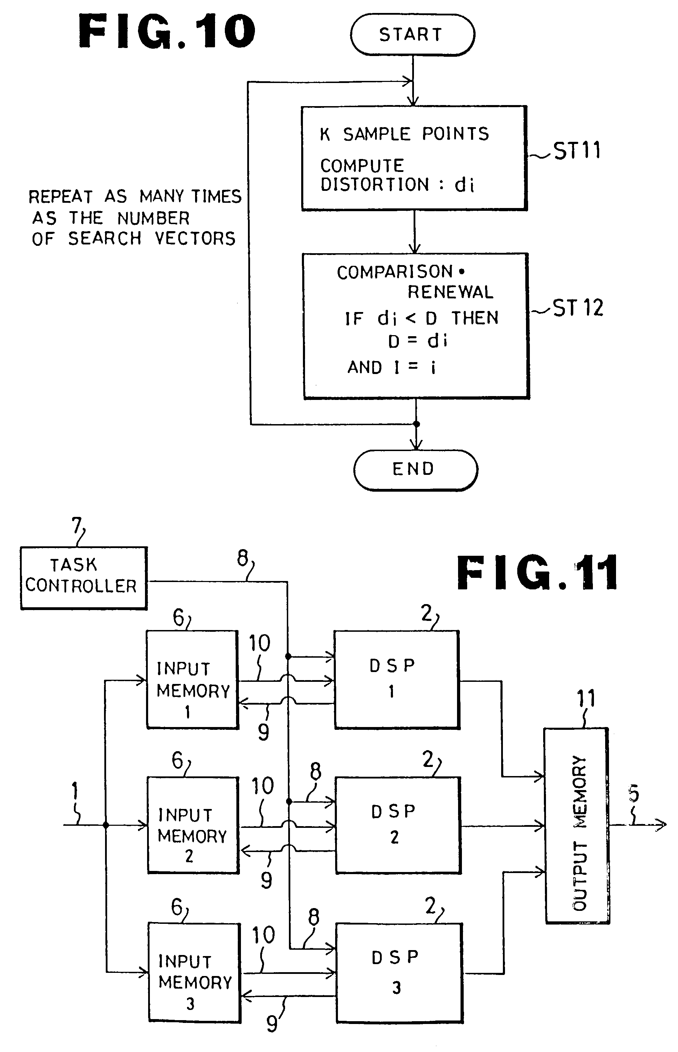

Fig. 10 shows the sequence of operations for detecting the motion vector V. Step ST11 calculates a distortion di at each of K pieces of sampling points on the basis of expression (5), and the next step ST12 compares the di with the minimal distortion D at position I, and, if di<D, the variables are replaced to be D=di and I=i. These operations are repeated for the number of search vectors, i.e., the operational process of expression (6), to determine the final minimal distortion D and its position I.

These operations must be completed within the period of each frame entered successively, and therefore a high-speed digital signal processor is required.

As an example, the digital signal processing system shown in Fig. 6 is used to carry out the motion compensation process. In this case, the multiplication-sum operation takes place KxM times for each input block, and the number of machine cycles is the total time expended by M times of processes including comparison and updating. Generally, the number of cycles for comparison and updating is small enough as compared with that of the multiplication-sum operation, and the volume of motion compensation operation for one block is virtually equal to KxM machine cycles.

However, since these operations are determined from the time corresponding to the period of frames entered successively, parallel processing will be needed for the mass multiplication-sum operations to be performed in a short time, depending on the operation process cycle time of a particular digital signal processor.

The conventional motion compensation scheme is implemented as described above, and in order to ensure the operation time for an enormous volume of operations when carried out using a digital signal processor, the processor needs to have parallel processings, resulting in an increased complexity and scale of hardware structure.

D.R. Mott and G. Arabadjis in: "Multimicroprocessor with Queue Memories", published in COMPCON FALL 77, 6 September 1977, Washington DC, USA, pages 418-422 report on a multifunction distributed or parallel processing computer architecture. The architecture contains a multiplicity of microprocessors with queue memories which work in a FIFO way. The architecture is composed of a number of identical small processors, all connected to access a set of queues through switching devices. Processors within a node operate independently but may communicate with each other via memory or the common bus for data or control information exchange. The system is data driven and the primary mechanism for process control and data exchange is via the FIFO queue memories. The processors view each of the queues as read/write memory locations. Indirect reference to these locations permit convenient substitution of alternate queues in the event of a failure.

## SUMMARY OF THE INVENTION

The present invention is intended to overcome the foregoing prior art deficiencies, and a prime object to provide a digital signal processing apparatus which uses the multiprocessor parallel configuration to its maximal processing ability.

Another object of this invention is to provide a digital signal processing apparatus which works efficiently with less number of processors and less capacity of memory, while ensuring the latitude of signal processing algorithm.

The present invention is set out in claim 1.

## BRIEF DESCRIPTION OF THE DRAWINGS

Fig. 1 is a block diagram showing the multiprocessor system of a conventional digital signal processing apparatus;
Fig. 2 is a diagram explaining the assigned areas of the processors shown in Fig. 1;
Fig. 3 is a block diagram showing the arrangement of other conventional digital signal processing apparatus;
Fig. 4 is a block diagram showing in detail the arrangement of the signal processing module shown in Fig. 3;
Fig. 5 is a block diagram showing the algorithm of the high-efficiency coder for a moving image;
Fig. 6 is a block diagram showing the arrangement of a third conventional digital signal processing apparatus;
Fig. 7 is a flowchart showing the process of 3-input arithmetic operation using the digital signal processing apparatus shown in Fig. 6;
Fig. 8 is a block diagram showing in brief the arrangement of the image coding transmitter which carries out the conventional motion compensative operation method;
Fig. 9 is a diagram used to explain the conventional motion compensative operation method;
Fig. 10 is a flowchart showing the operational process for detecting a motion vector in the conventional motion compensative operation method;
Fig. 11 is a block diagram showing the digital signal processing apparatus based on the first embodiment of this invention;

Fig. 12 is a diagram explaining the area assignment for the processors shown in Fig. 11;

Fig. 13 is a block diagram showing the arrangement of the digital signal processing apparatus formed by connecting in cascades a plurality of digital signal processors (DSP blocks) shown in Fig. 11;

Fig. 14 is a diagram showing the concept of process of each DSP block shown in Fig. 13;

Fig. 15 is a block diagram showing the digital signal processing apparatus based on the second embodiment of this invention;

Fig. 16 is a block diagram showing the internal arrangement of the signal processor shown in Fig. 15;

Fig. 17 is a diagram explaining the concept of control operation of the digital signal processing apparatus shown in Fig. 15;

Fig. 18 is a diagram explaining the relation between parameter data and processing block data in the digital signal processing apparatus shown in Fig. 15;

Fig. 19 is a diagram showing the correspondence between data blocks and a frame;

Fig. 20 is a block diagram of the arrangement in which a plurality of digital signal processors are included in the digital signal processing apparatus shown in Fig. 15;

Fig. 21 is a block diagram showing the digital signal processing apparatus based on another embodiment of this invention;

Fig. 22 is a flowchart showing the operational process of the digital signal processing apparatus shown in Fig. 21.

## DETAILED DESCRIPTION OF THE PREFERRED EMBODIMENTS

Specific embodiments of the present invention will now be described with reference to the drawings.

Fig. 11 shows, as an embodiment of this invention, an example of the image coder of the digital signal processing apparatus. In the figure, input data 1 is entered to a first through third input memories 6. A task controller 7 estimates the number of valid pixels on the basis of the contents of the input memory 6, determines the distribution of coding process among a first, second and third DSPs 2, and issues control signals as address control signals 8 to the DSPs 2. Upon receiving the address control signals 8, the first, second, and third DSPs 2 issue addresses 9 to respective first, second and third input memories 6 to fetch data 10 assigned for processing, and implement the coding processes based on the preset program. Upon completion of processes, the first, second and third DSPs 2 store processed data in an output memory 11, which, after reading the whole data of the DSP block, sends the processed data to the next DSP block.

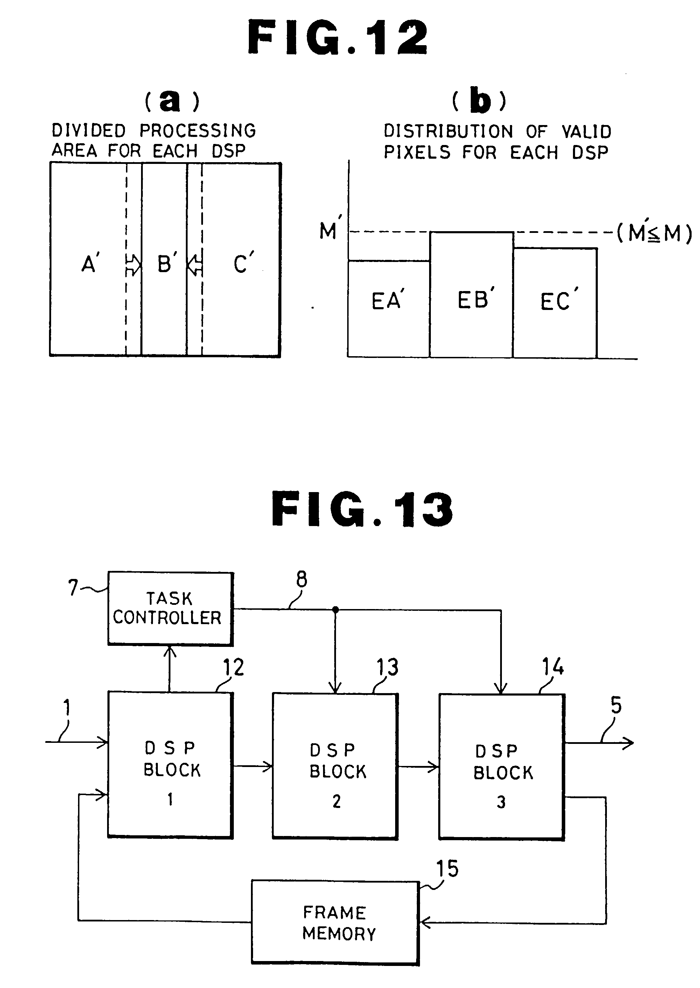

In this case, each DSP 2 is controlled by the task controller 7 so that all DSP 2 have even numbers of valid pixels assigned, and therefore the image coding process time is controlled so that the difference of process times among the DSPs 2 is minimal. Namely, in case of coding an image with numbers of valid pixels as shown in Fig. 12 (b), an area A having a relatively small number of valid pixels is enlarged to A', an area C having a relatively large number of valid pixels is also enlarged to C', and an area B having a larger number of valid pixels is reduced to B', as shown in Fig. 12(a), by the task controller 7. The task controller 7 issues the address control signals 8 corresponding to the assignment distribution to the first, second and third DSPs 2.

For example, in response to the issuance of the address control signal 8 for coding the image data of area A to the first DSP 2, it produces the address 9 for the area A' in the first input memory 6 to fetch data and implements the image coding process by following the prescribed program. Similarly, the second and third DSPs 2 are directed to carry out the image coding processes for the areas B' and C', respectively. Consequently, the first, second and third DSPs 2 have their numbers of valid pixels EA', EB' and EC' for coding virtually made even, i.e., the same quantity of image data to be processed, as shown in Fig. 12(b). As a result, the maximum volume of process M' dealt with by the inventive apparatus becomes sufficiently less than that M of the conventional apparatus, and the process time required for each DSP block is reduced.

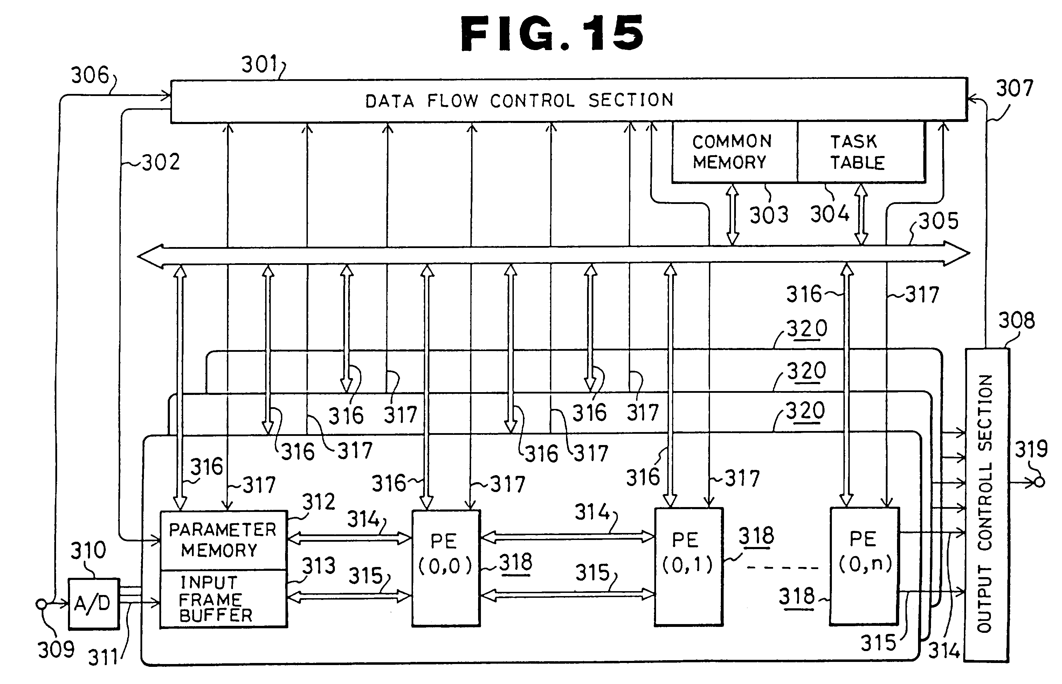

Fig. 13 shows the inter-frame coder constructed by a serial connection of DSP blocks in three stages. Each DSP block performs the process shown in Fig. 14. The first DSP block 12 enters upon the input data 1 and, after producing a differential signal, implements the valid/invalid judgment, evaluates the distribution of the numbers of valid pixels in the image data, and sends the information to the task controller 7. Based on the information, the task controller 7 issues address control signals 8 for dictating such address adjustment that the DSPs in the second DSP block 13 have even assignments of data. Each DSP in the second DSP block 13 implements the process by adjusting the read address as described above. The third DSP block 14 is designed to operate identically.

Although in the foregoing embodiment the DSP process assignment areas are controlled on the basis of the valid pixel distribution among areas in image data, the present invention is not confined to this scheme, but feedback DSP assignment control based on the general quantity distribution of transmitted information is also possible, for example.

A second embodiment of this invention will be explained with reference to the drawings. Fig. 15 shows an example of the configuration of a digital signal processing apparatus, the second embodiment of this invention. In the figure, 301 is a data flow control section (D F C) working as a control means; 302 are control parameter data output from the data flow control section 301; 303 is a common memory (C M) which stores feedback data, a large capacity data and table, etc.; 304 is a task table (T B) which stores a processing status of each signal processor element (P E) 318; 305 is a common bus (C-BUS) which has the function as a status communicating means consisting of at least a bus connected to the common memory 303, the task table 304 and each signal processor element 318; 306 is a video frame synchronizing signal (F p) which discriminates the starting point of a video frame to be supplied to the data flow control section 301 in the case of inputting video signals etc.; 307 are feedback data (F b) which inform the data flow control section 301 of the occupying status, data quantity of a sending buffer etc. and finishing of one frame data processing etc. output from an output control section 308 described later; 308 is an output control section (O C) provided with a buffer memory for outputting data at a certain constant speed in restructuring processed blocks output from a plurality of signal processor elements (P E) 318 for example in the scanning order in a video frame; 309 is an input terminal of analog signals; 310 is an A/D converter; 311 are digitized input data; 312 is a parameter memory (P M) consisting of dual port memories; 313 is an input frame buffer consisting of dual port memories for functioning as a block formation means by memorizing input data 311 temporarily; 314 is a bus connecting the parameter memory 312 to the signal processor elements 318; 315 is a bus connecting the input frame buffer 313 to the signal processor elements 318 in order to supply data in a block unit; 316 is a common bus input/output port connected to the common bus 305; 317 is an interruption control port for sending/receiving timing control signals from the data flow control section 301; 318 are individual signal processor elements (P E) and these signal processor elements are provided with software which functions as a starting means, and these signal processor elements are mutually connected with buses 314 and 315, and said last stage signal processor element 318 and the output control section 308 are also connected with buses 314 and 315; 319 is an output terminal through which data are output at a certain constant speed and timing from the output control section 308; 320 is a multiprocessor module comprising the parameter memory 312, the input frame buffer 313 and a plurality of signal processors 318 connected in series through the buses 314 and 315, for example.

The data flow control section 301 has a judgment means which scans the task table 304 at a certain constant cycle and judges the processing conditions of individual signal processor elements 318. The data flow control section 301 also has a control means which based on the result of the judgment means decides if each signal processing module can process the next signal process block and when the processing is found to be possible it makes process start by sending out an interruption signal to the interruption control port 317 and when the processing is found to be impossible it instructs the transfer of the signal process block to another signal processing module which can process the block. When a parallel processing of a constant cycle, in which the task table 304 is scanned, is to be done the scanning period shall be the number of parallelness times of the input cycle of the signal process block, and when a series processing is to be done the scanning period shall be 1/n of the input cycle; thus by the synchronization with the input data frame (for example a video frame) the matching with the real time can be maintained.

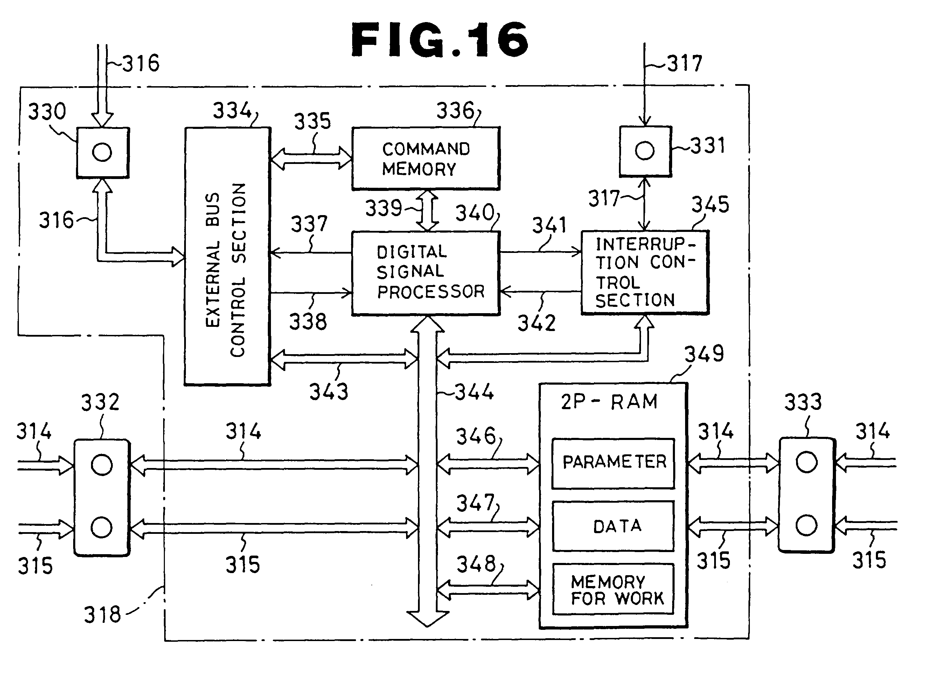

Fig. 16 shows an example of the internal constitution of the signal processor elements 318 as shown in Fig. 15. In the figure, 330 is a terminal to which the common bus input/output port 316 is to be connected; 331 is a terminal to which the interruption control port 317 is to be connected; 332 is a terminal to which the buses 314 and 315 are to be connected; 333 is similarly a terminal which connects the buses 314 and 315 between the adjacent signal processors; 334 is an external bus control section (BUS-CONT) with the function as a competitive control means to control the make/break of the common bus 305 through the bus 316; 335 is a bus for loading a writable control storage (W C S) 336, which memorizes a signal processing program, from the external bus control section 334 at an initial time; 337 is a BUSREQ which requires the connection of the common bus 305 to the external bus control section 334; 338 is a BUSACK which denotes the permission for the BUSREQ 337; 339 are command codes which are successively read out from the writable control storage 336 according to the signal processing program; 340 is a digital signal processor (D S P) which execute data processing; 341 is an INTACK which informs an interruption control section (INTER-CONT) 345 of the reception of an interruption from the digital signal processor 340; 342 is, on the contrary to it, an INTREQ which informs the digital signal processor 340 of the requirement of an interruption; 343 is a bus to connect an internal bus 344 to the common bus 305 through the external bus control section 334, and the internal bus 344 is directly connected to the digital signal processor 340; 345 is an interruption control section (INTR-CONT) which processes an interruption signal from the data flow control section 301; 346 is a bus which writes the parameter of a processed data block on a dual port memory 349 through the internal bus 344; 347 is similarly a bus which writes processed block on the dual port memory 349; 348 is a bus which connects a work memory in the dual port memory 349 and the internal bus 344; 349 is a dual port memory provided with a parameter memory, data memory and work memory which outputs data to the adjacent signal processor element 318 through the terminal 333 and buses 314 and 315.

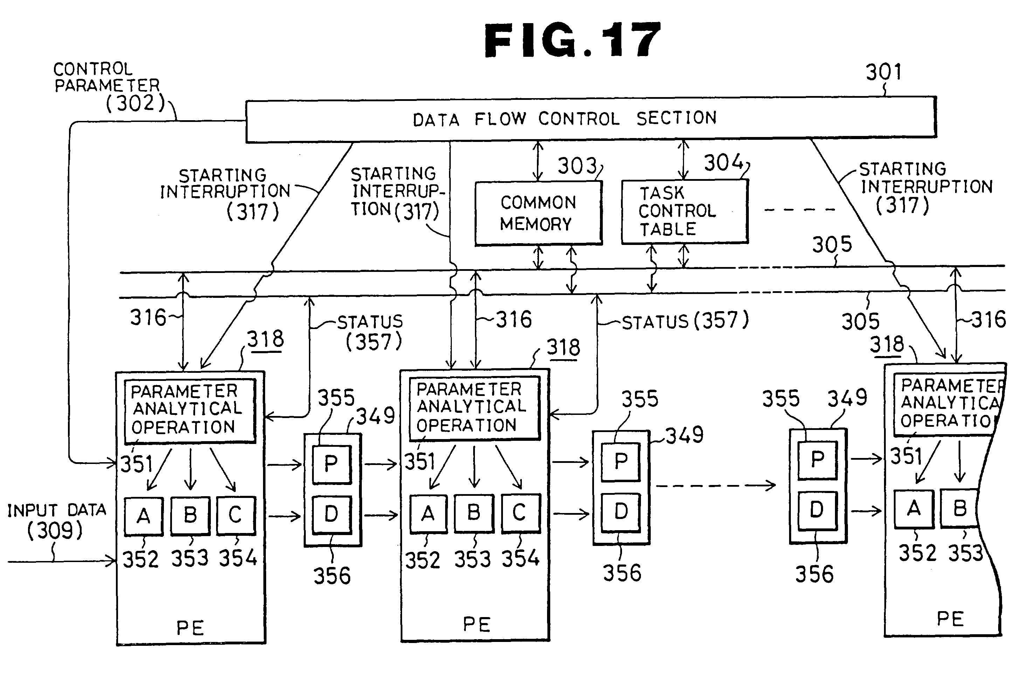

Fig. 17 explains the internal control operation of the digital signal processing apparatus shown in Fig. 15, and the same parts as those shown in Fig. 15 are given the same symbols; the explanation of them is therefore omitted.

In the figure, 351 is a block which shows analytical operation of a parameter inside the signal processor element 318; 352, 353, 354 are blocks which show the operation of individual signal processing subroutines A, B and C according to the parameter of each of them; 355 is a block which shows the contents of a parameter memorized in the dual port memory 349; 356 is a block which shows the contents D of processed block data memorized in the dual port memory 349.

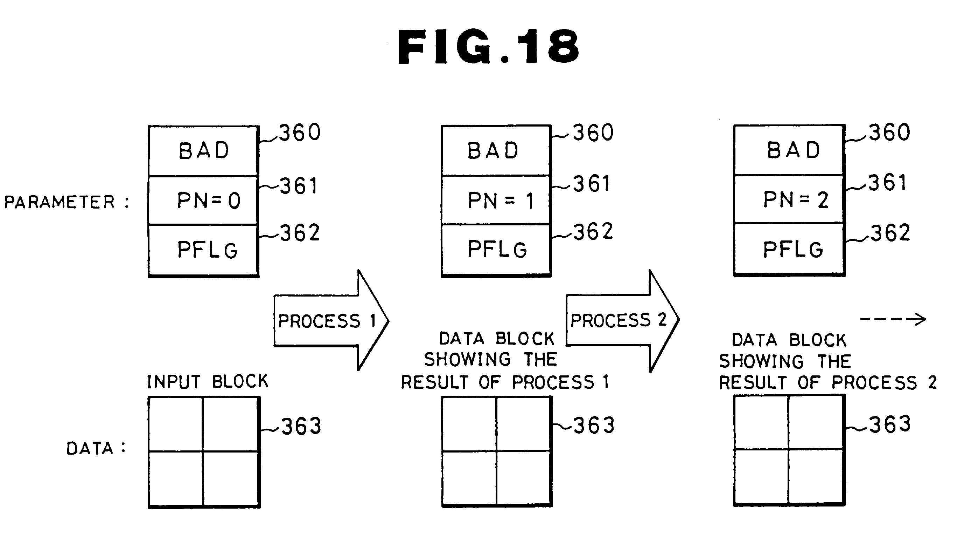

Fig. 18 explains an example of the relation between the parameter data and process block data until a data block is successively given a series of function processes and an output result is obtained through series and parallel processes of block units executed in the digital signal processing apparatus shown in Fig. 15. In the figure, 360 is a block address (B A D) showing the position of an input block in a frame; 361 is a processing number (PN) showing the kind of a process to be given to said block; 362 is a flag (PFLG) which discriminates the result of the process; 363 is a data block in which for example eight subblocks are combined to form a block.

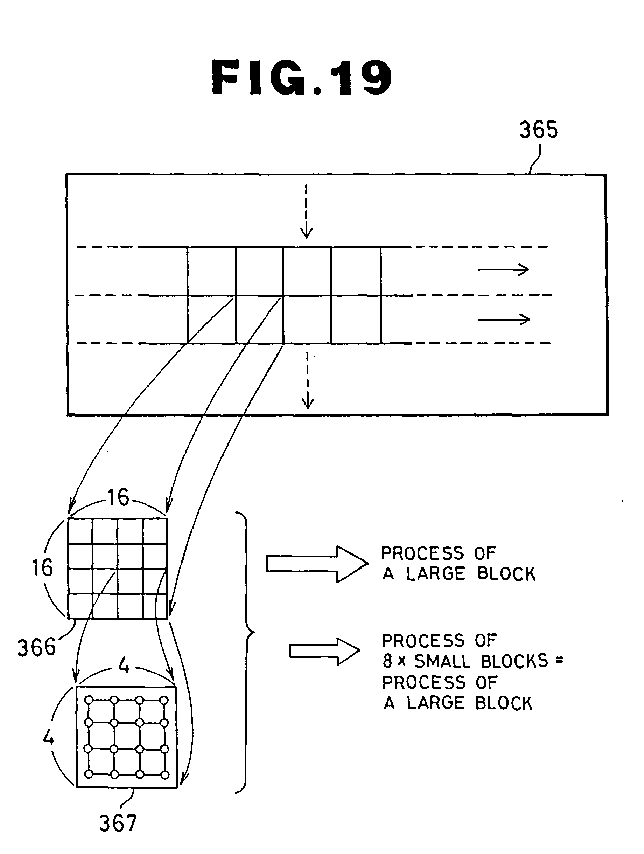

Fig. 19 shows an example of correspondence between the data block 363 shown in Fig. 18 and one video frame when a picture coding process is performed in this system. In the figure, 365 is one video frame; 366 is a data block when a picture is divided into 16 lines x 16 pixels; 367 is a subblock which is obtained when the block is further divided into 8 blocks of 4 lines x 4 pixels.

An explanation of the operation based on Fig. 15 is given in the following. Input data 311 digitized by an A/D converter 310 are memorized in an input frame buffer 313 being scanned in a raster form in synchronization with a video frame synchronizing signal 6, for example. Input data 311 memorized in the input frame buffer 313 are added to initial parameter data 302 by the data flow control section 301 by blocks and the parameter data 302 are memorized in the parameter memory 312. These parameter memory 312 and input frame buffer 313 consist of dual port memories and writing/reading is simultaneously possible between two independent ports.

Data blocks are read from the input frame buffer 313, and the parameter is read in a data block unit from the parameter memory 312. Data blocks and parameter are sent through the buses 314 and 315 to the signal processor 318 element where they are given the first process of a series of functional processes in a block unit. Next, the results and the rewritten parameters are written in the dual port memory 349 in the signal processor element 318. It is the basic function of a processor module 320 to execute processes successively between the adjacent signal processor elements 318 and to execute a pipeline processing for each block unit.

When a processing is executed for each block unit, if a feedback data such as coded previous frame data are to be referred to, feedback data are input to the common memory 303 connected to the common bus 305 and memorized. The process of a new video frame is performed by such processing that the other signal processor 318 than the one which data have written through common bus 305 refers the common memory 303. If the writing of the feedback data of the previous frame is not completed in the proper position in the common memory 303, the execution time of the process shall be specified.

When the processing of a unit (block processing) is finished, each signal processor element 318 memorizes the status showing the completion of the present processing in the task table 304, and wait the next processing. The data flow control section 301 scans the task table 304 and when the processing of the former stage signal processor elem 318 is completed, it sends out an interruption signal to said signal processor element 318 and start the next processing. By repeating the operation, the execution of the operation control of each signal processor element 318 is performed.

To conduct parallel processing in a block unit for each processor module 320, the data processing condition in the input frame buffer 313 of each processor module 320 is detected with the status information of the initial stage signal processor 318 and individual block data are distributed by proper load distribution and input to each multi-processor module 320.

These results are shown by the control parameter data of the initial stage and the signal processor element 318 discriminates the processing for the block by deciphering the above results and executes a proper processing. Among these processings there are for example functional processors such as a block identifier 253, a coder 254, a local decoder 260, an inter-frame subtracter 252, a motion compensator 265, an inter-frame adder 261, a variable length coder 256, and besides them a processing which performs only load distribution such as a processing of transferring block data is included.

In the data flow control section 301, it is possible to make an arbitrary signal processor 318 undertake an arbitrary processing by controlling the first stage parameter; owing to such performance as mentioned above the load can be so distributed to signal processor elements 318 as to make them work efficiently as much as possible.

The output control section 308 reconstitutes processed blocks which are output at random times into for example a scanning order of an input video frame and produces a resultant output for an output terminal 319 and also produces feedback data 307 to inform the data flow control section 301 of these data.

The output control section 308 takes charge for example of a video multiplex section 257 and a transmitting buffer 258 shown in Fig. 5, and it outputs a feedback signal 269 from the transmitting buffer 258 to a coding control section 270 which takes charge of the data flow control section shown in Fig. 15.

The data flow control section 301 takes charge of the functions of above-mentioned load distribution and the coding control section 270 as shown in Fig. 5, and finds the block identification control signal 273 and coding control signal 274 and multiplex them in the control parameter data for the execution of the whole characteristic control. Refer to Fig. 16; the processing of a single signal processor element 318 is started by the interruption from the data flow control section 301, and the contents of the parameter memory 312 is input to it through an internal bus 344. On the basis of the discrimination result of the contents, the processing of one unit of block data is performed by a digital signal processor 340.

The result and rewritten parameters are written in a dual port memory 349, and the status is set in the task table 304 through an external bus control section 334; thus the preparation for the next process is ready. An interruption control section 345 interfaces the interruption from the data flow control section 301 with the digital signal processor 340. The parameter and the data written in the dual port memory 349 are read by an adjacent signal processor element 318 which is connected to a terminal 333, and the next stage process is given.

Fig. 17 shows the flow of these processes performed by the data flow control section 301, and it shows the relation between the control of writing/referring of feedback data to the common memory 303 and the control of status writing in the task table 304 by the data flow control section 301 through the common bus 305, and the start processing control in the signal processor element 318 by a parameter analyzer 351.

Fig. 18 shows the rewriting of the contents of control parameter data 302, which are added corresponding to an input block data 363, and the flow of these processes. A block address which shows for example the position in a frame or time sequential order of a block, and a flag 362 which is referred to on the kind of the next process and the contents of the next process are contained in the control parameter data 302. The block address 360 is used for the discrimination of a special process in a certain case for example with an end point in a picture or for the restructure of data in the output control section 308 when a process is finished. The flag 362 shows for example the results etc. of coding control information 271, a block identification control signal 273, coding control signal 274, and a block identifier 253 as shown in Fig. 5. Input block data 363 are set to have the minimum size handled in a unit processing. The motion compensator 265 shown in Fig. 5 has a block of 16 x 16 size and after the block identifier 253 blocks of 4 x 4 sizes are handled. In such a case as mentioned above where a block size differs for each unit processing, block sizes are arranged to have matching between a maximum block size and a subblock size contained in it. In this case, eight pieces of 4 x 4 blocks are combined to constitute a 16 x 16 block. When coding of a picture is performed, this block corresponds to a small picture element made by dividing an ordinary one frame into small square picture elements.

Fig. 19 shows an example where one video frame 365 is divided into a block 366 and subblocks 367.

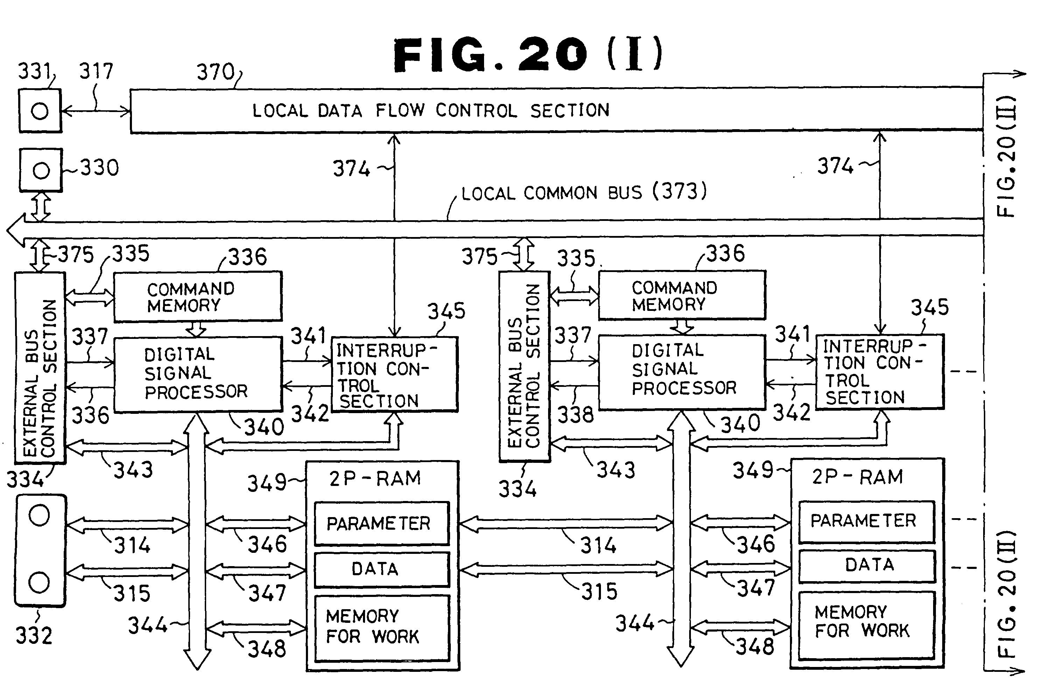

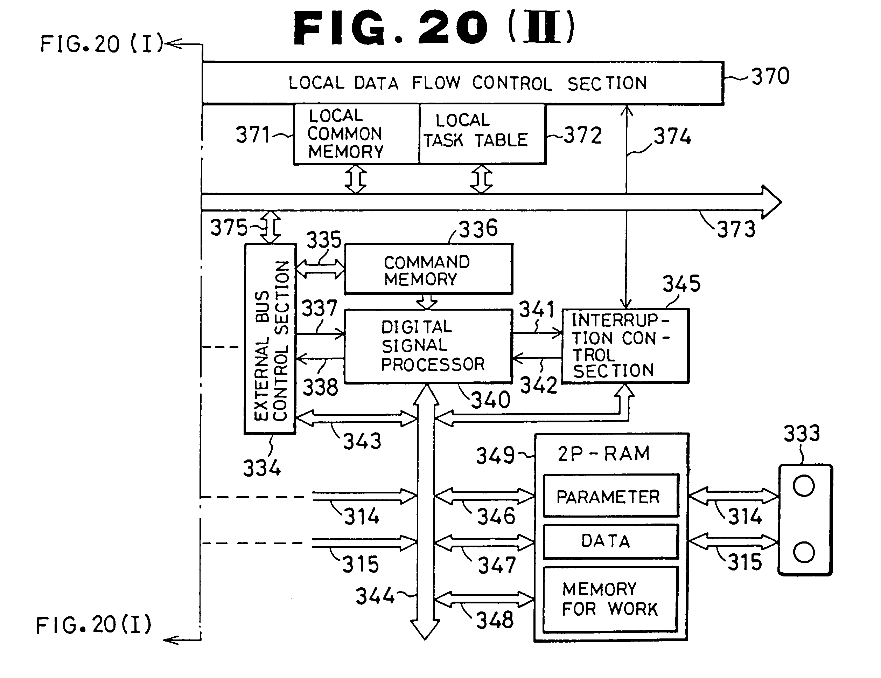

In the above embodiment, a signal processor element 318, which has a single digital signal processor 340, is shown but when a higher speed processing is preferable a hierarchical structure combined with a plural number of digital signal processors can be used. The constitution of the signal processor element 318 in the case of the hierarchical structure is shown in Fig. 20. In this case, as the load for the data flow control section 301 increases a local data flow control section 370, a local common memory 371, and a local task table 372 are provided inside the signal processor 318 in order to locally execute the optimum load distribution inside the signal processor. The data flow of the digital signal processor 340 which is connected to a local common bus 373 is the same as that shown in Fig. 15 except that the operation is executed inside the signal processor 318.

In the above embodiment, a series/parallel structure is adopted but in some case a complete parallel or complete series structure is effective according to the purpose of a signal processing and a real time processing could be possible.

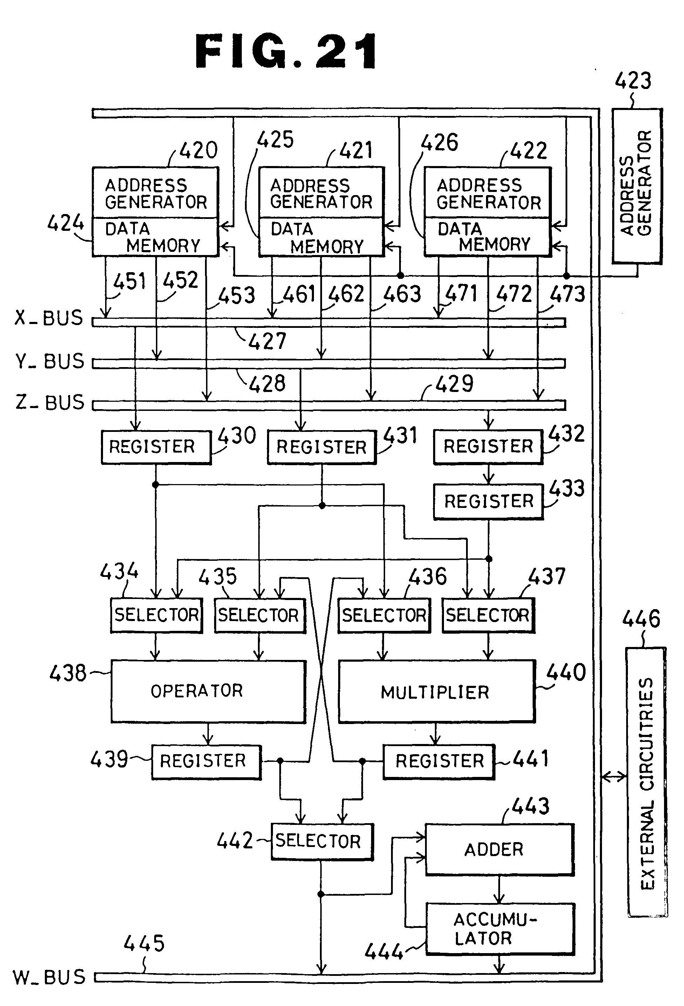

The other embodiment of this invention is explained with reference to Fig. 21. In Fig. 21, 420, 421 and 422 are address generators for readout data; 423 is an address generator for writing data; 424, 425 and 426 are data memories, and address data generated by the address generator 423 are input to these memories; 427, 428 and 429 are data buses which transfer readout data from the data memories 424, 425 and 426; 430, 431 and 432 are registers for holding data transferred from data buses 427, 428 and 429; 433 is a register to hold the output of the register 432; 434 is a selector to select the output of the register 430 or that of the register 433; 435 is a selector to select the output of the register 431 or that of the register 441; the selector 434 and the selector 435 constitute a first selector group; 436 is a selector to select the output of the register 430 or the output of a register 439; 437 is a selector to select the output of the register 431 or the output of the register 433; the selector 436 and the selector 437 constitute a second selector group; 438 is an operator which operates by inputting the output of the selectors 434 and 435; 440 is a multiplier which performs multiplication by inputting the output of selectors 436 and 437; the register 439 is the one to hold the output of the operator 438; a register 441 is the one to hold the output of the multiplier 440; 442 is a selector which selects the input from the register 439 or the input from the register 441 and outputs it; 443 is an adder which adds the output of the output selector 442 and the output of an accumulator 444 and outputs to said accumulator 444; 445 is a data bus to transfer output data of the accumulator 444 and the output selector 442; 446 is an interface circuit which performs outputting/inputting of data to/from external circuits; 451 - 453, 461 - 463, 471 - 473 denote signal lines which output the output of data memories 424, 425 and 426 to data buses 427, 428 and 429.

The following are the explanation of operation. In Fig. 21, assume that data series with N elements, $\underline{A} = (a_i|i$

= 1 to N), $\underline{B}$ = (bili = 1 to N), $\underline{C}$ = (cili = 1 to N) are previously stored respectively in the data memory 424, data memory 425, and data memory 426.

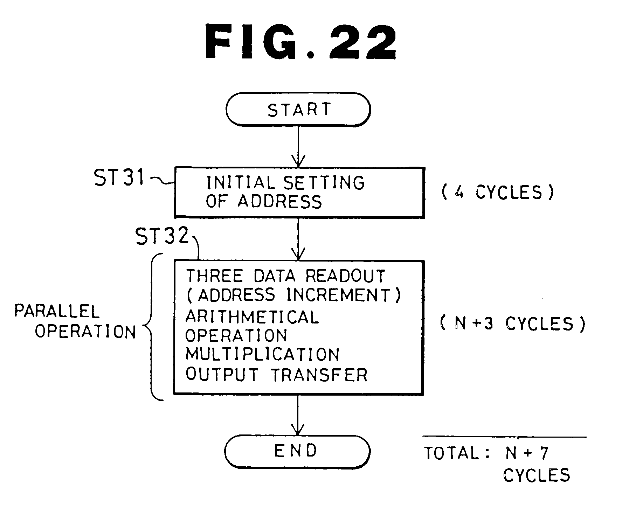

Under the conditions above, the operation when the operation of three inputs and one output is performed is shown below. The operation processing flow is shown in Fig. 22.

To begin with, at a step ST31, top addresses of three series of input data and of an output result storing memory are initially set by address generators 420, 421 and 422. After that the address generators are assumed to take simple increment actions.

The data memory 424 corresponds to the address generator 420; the data memory 425 corresponds to the address generator 421; the data memory 426 corresponds to the address generator 422. Individual data memories 424, 425 and 426 readout data based on the addresses of address generators 420, 421 and 422.

Data are input to three data buses 427, 428 and 429 (X-BUS, Y-BUS, Z-BUS) respectively from data memories 424, 425 and 426, so that for the outputting of each of these data memories 424, 425 and 426 to a specified data bus, only one bus out of three is controlled to be effective, and the other two are controlled to be in the state of a high impedance. In this case, the output of data buses is limited to that of the one which is made to be effective. For example, when $\underline{A}$ data series is to be input to the register 430, the $\underline{A}$ series data are output to the signal line 451, and the signal lines 461 and 471, which output data from other data memories 425 and 426 to the data bus 427, are in the state of a high impedance. The same thing goes for other data buses.

Each of these data series are set respectively in the registers 430, 431 and 432. Three data buses 427, 428 and 429 can select data from three data memories 424, 425 and 426, so that $3^3$ kinds of data set combinations can be supplied to the registers 430, 431 and 432.

Two expressions as shown below are defined in the way of three input operation and then the processing method is shown in the following:

$$(ai \oplus bi) \times ci \tag{7}$$

$$(ai \times bi) \oplus ci \tag{8}$$

where $(x \oplus y)$ expresses an arithmetic and logic operation for finding results or values of addition, subtraction, maximum values or minimum values for two input data x, y, and $(x \times y)$ expresses multiplication. The explanation of operation processing flow of the expression (7) is given in the Table 3. The mark of "X" in the table represents an unknown.

Table 3

| Machine cycle | Register 430 | Register 431 | Register 432 | Register 433 | Register 439 | Register 441 | Output of output selector 442 |
|---|---|---|---|---|---|---|---|
| 1 | $a_1$ | $b_1$ | $c_1$ | x | x | x | x |
| 2 | $a_2$ | $b_2$ | $c_2$ | $c_1$ | $a_1 \oplus b_1$ | x | x |
| 3 | $a_3$ | $b_3$ | $c_3$ | $c_2$ | $a_2 \oplus b_2$ | $(a_1 \oplus b_1) \times c_1$ | x |
| 4 | $a_4$ | $b_4$ | $c_4$ | $c_3$ | $a_3 \oplus b_3$ | $(a_1 \oplus b_2) \times c_2$ | |
| $\vdots$ | $\vdots$ | $\vdots$ | $\vdots$ | $\vdots$ | $\vdots$ | $\vdots$ | $\vdots$ |
| N | $a_N$ | $b_N$ | $c_N$ | $c_{N-1}$ | $a_{N-1} \oplus b_{N-1}$ | $\vdots$ | $\vdots$ |
| N + 1 | x | x | x | $c_N$ | $a_N \oplus b_N$ | $\vdots$ | |
| N + 2 | x | x | x | x | x | $(a_N \oplus b_N) \times c_N$ | |
| N + 3 | x | x | x | x | x | x | $(a_N \oplus b_N) \times c_N$ |

EP 0 690 377 B1

At a step ST32 a selector 434 selects the side of a register 430 and a selector 431 selects the side of a register 435. By the use of these two selected data ($a_i$ and $b_i$) the operation ($a_i \oplus b_i$) is performed with an operator 438, and the result is stored in a register 439. This value is output from the register 439 in the next step.

The data $c_i$ in the register 432 are delayed by the register 433 by one step. In the next step a selector 436 selects the side of the register 439 and a selector 437 selects the side of a register 433. By the use of these two data, ($a_i \oplus b_i$) is multiplied by $c_i$ with the multiplier 440 and the result ($a_i \oplus b_i$) x $c_i$ is stored in a register 441. This value is output from the register 441 in the next step. By an output selector 442's selecting the register 441, the data ($a_i \oplus b_i$) x $c_i$ are sent to one of the data memories 424, 425 and 426 through a data bus 445 based on the address shown by the address generator 423.

In this invention, readout of data, execution of operation and writing of data are continuously executed by a pipeline processing, so that the control of each section can be operated in parallel. Therefore if the three input one output operation is executed for a data series with N elements, from the time when the first datum is readout until the time when the processing result of the last datum is written into a memory, the period of (N + 3) cycles are required.

The explanation of operation processing flow of expression (8) is given in Table 4. The mark "x" in Table 4 represents an unknown.

Table 4

| Machine cycle | Register 430 | Register 431 | Register 432 | Register 433 | Register 439 | Register 441 | Output of output selector 442 |
|---|---|---|---|---|---|---|---|
| 1 | $a_1$ | $b_1$ | $c_1$ | x | x | x | x |
| 2 | $a_2$ | $b_2$ | $c_2$ | $c_1$ | x | $a_1 \times b_1$ | x |
| 3 | $a_3$ | $b_3$ | $c_3$ | $c_2$ | $(a_1 \times b_1) \oplus c_1$ | $a_2 \times b_2$ | x |
| 4 | $a_4$ | $b_4$ | $c_4$ | $c_3$ | $(a_2 \times b_2) \oplus c_2$ | $a_3 \times b_3$ | $(a_1 \times b_1) \oplus c_1$ |
| ... | ... | ... | ... | ... | ... | ... | ... |
| N | $a_N$ | $b_N$ | $c_N$ | $c_{N-1}$ | ... | ... | ... |
| N + 1 | x | x | x | $c_N$ | ... | $a_N \times b_N$ | ... |
| N + 2 | x | x | x | x | $(a_N \times b_N) \oplus c_N$ | x | ... |
| N + 3 | x | x | x | x | x | x | $(a_N \times b_N) \oplus c_N$ |

The operation in which three input data are readout to registers 430, 431 and 432 is the same as that in the

17

case of expression (7). When the operation of expression (8) is executed, the selector 436 selects the side of the register 430 and the selector 437 selects the side of the register 431, and the operation (ai x bi) is performed by the multiplier 440 and the result is set in the register 441.

In the next step, the selector 434 selects the side of the register 433 and the selector 435 selects the side of the register 441, and the operation (ai x bi) $\oplus$ ci is executed by the operator 438 and the result is set in the register 439. In the next step, by the selector 442's selecting the side of the register 439 the selection result is written into one of the data memories 424 to 426.

Thus the case of the operation of expression (8) is the same as the case of expression (7), thereby the total processing time requires (N + 3) cycles.

In the case of the operation of two input one output, the value of (ai $\oplus$ bi) can be obtained through the procedure as shown in the following: the selector 434 selects the side of the register 430 and the selector 435 selects the side of the register 431 and after the operation is executed by the operator 438 the side of the register 439 is selected by the selector 442 in the next step. The value of (ai x bi) can be obtained through the procedure as shown in the following: the selector 436 selects the side of the register 430 and the selector 437 selects the side of the register 431, and after the execution of the operation with the multiplier 440 the selector 442 selects the side of the register 441 in the next step.

The processing speed in the case of three input one output is (2N + 10/N + 7) times of that of prior art, that is almost half times if N is a large number.

When a cumulative value is to be found in the three input one output operation, a cumulative value till a point on the way or an initial value is stored in the accumulator 444 and each one of the successive operation results is added to the cumulative value in the accumulator 444 with the adder 443 and the added result is stored in the accumulator 444 again. These processes are performed repeatedly. Processing cycles therefore are not increased due to cumulative operation.

## Claims

1.   A digital signal processing apparatus comprising a multiprocessor module including a plurality of signal processors (318) in connection, each of said signal processors (318) including an instruction memory (336) which stores a sub-program that describes a functional process of a signal processing operation that is a combination of the functional processes for data blocks formed of a plurality of data, said instruction memory (336) being accessible for writing from external units and connected through an internal bus (344) via an external bus control section (334) with a data memory which is used for the execution of said signal processing operation;

a digital signal processor (340) which executes any of said functional processes in units of data blocks in accordance with a sub-program stored in said instruction memory (336);
block forming means which forms a signal processing block of one unit by appending, for each data block, control parameters including the type of functional process to be executed, a block address indicative of the position in time and spatial domains and the order in time and spatial domains of said data block and information indicative of post-process attributes of said data block;
activation control means which analyzes said control parameters to activate the signal processors (340) to execute each subprogram of said functional process indicated by said parameter;
an interrupt controller (345) which controls the timing of execution of said activation control means (352, 353, 354) in response to an external interrupt;
status indication means which indicates to the external units as to whether said functional process is in execution;
a data input bus (316) which reads out a unit of signal processing block from an external data memory by way of said internal bus (344) for the execution of said functional process;
at least one dual-port memory (349) capable of reading and writing independently on both ports, with one port being connected to said internal bus (344) and adapted to write a unit of signal process block resulting from said functional process, and with another port being opened to the external units;
and an external bus controller (334) including a bus contention control means which connects said internal bus (344) to a common bus (373) consisting of at least one data bus provided externally only when the common bus (373) is not used by an external device and implementing data transfer for the unit of signal processing block or arbitrary quantity of data;
and a transfer control means which performs data transfer asynchronously in units of signal processing block by linking adjoining ones of said signal processors (340) in a serial and/or parallel arrangement by connecting the externally-opened port of said dual-port memory (349) in one processor (340) to said data input bus (316) of another processor;

an input frame buffer of dual-port memory (349) which forms a digital signal into blocks and writes the signal on one port in units of frame or block on a realtime basis and implements data input by connecting another port to said input bus in the first-stage signal processor (340) in said multiprocessor module;

at least one common memory (371) which is connected to said common bus (373) and adapted to transact data in units of signal processing block or arbitrary number of data with all of said signal processors (340);

a task table (372) which memorizes said status indication means in said signal processors (340);

an output controller which reads out the last-processed signal processing block written in said dual-port memory (349) in the last-stage signal processor (340) in said multiprocessor module, rearranges the block in accordance with said processing parameters so as to be in compliance with the position in time and spatial domains and the order in time and spatial domains, stores the rearrangement result temporarily in a buffer memory and external units the buffer memory contents at a constant quantity per unit time;

a data flow controller (370) which scans the contents of said task table (372) at a constant interval, determines the process assignments of said signal processors (340) on the basis of feedback information such as the degree of occupancy of said buffer memory indicated by said output controller, and activates the interrupt controller (345) of each said signal processor (340); and

a writing means which newly generates said processing parameters for each signal processing block entered newly to said input frame buffer and writes the parameters in corresponding positions of input frame buffer.

2. A digital signal processing apparatus according to claim 1, wherein said data flow controller (370) comprises judgment means which judges the processing status of each processor by scanning said task table (372) at a constant interval; and first control means which determines on the basis of the result provided by said judgment means as to whether each signal processing module can process a next signal processing block, and, if possible, issues an interrupt signal to said interrupt controller (345) to initiate processing or, if impossible, directs a signal processing module, which can have a process, to transfer said signal processing block.

3. A digital signal processing apparatus according to claim 2, wherein said judgment means performs scanning, in case of parallel processing in a constant period, in a time length which is the input period of said signal processing block multiplied by the number of parallel processings, or, in case of serial processing, in a time length which is the input period divided by an integer greater than or equal to one, and implements matching with real time by being in synchronism with input data frames.

4. A digital signal processing apparatus according to claim 1, 2 or 3, wherein said data flow controller (370) includes second control means, in which a piece of image data is divided into small rectangular blocks to form said data blocks, the size of data block is made equal to a maximum or minimum size dealt with by said functional processes and positions of small blocks in said piece of image data are used as spatial position information of said process parameters, and, in case of inter-frame coding for a moving image, a frame memory for storing a coded previous frame image is said common memory (371) and a signal processing block processed by a signal processor unit is written in the position of the common memory (371) by way of said common bus (373) thereby to form feedback data, and a new image frame is processed by making reference to said feedback data from another signal processing block by way of the common bus (373); and third control means which, if feedback data of the previous frame has not yet written in the position in the common memory (371), dictates an execution wait for the process.

5. A digital signal processing apparatus according to claim 4, wherein a plurality of digital signal processors (340) are connected in parallel through a local common bus (373), a local signal processor is formed of a local data flow controller (370) which performs only process activation control for said digital signal processors (340), a local common memory (371) which can be accessed commonly by said digital signal processors (340), and a plurality of digital signal processors (340), a plurality of local signal processors (340) being connected to complete said signal processors (340) in a hierarchical structure.

6. A digital signal processing apparatus according to claim 5, wherein said multiprocessor module is one in number.

7. A digital signal processing apparatus according to claim 5, wherein said multiprocessor module is more than one in number.

**Patentansprüche**

1. Digitalsignal-Verarbeitungsvorrichtung, mit

EP 0 690 377 B1

einem Mehrfachprozessormodul einschließlich einer Mehrzahl von verbundenen Signalprozessoren (318), wobei jeder der Signalprozessoren (318) einen Befehlsspeicher (336) beinhaltet, welcher ein Unterprogramm speichert, das einen funktionalen Vorgang eines Signalverarbeitungsvorgangs beschreibt, der eine Kombination des funktionalen Vorgangs für aus einer Mehrzahl von Daten gebildeten Datenblöcken ist, wobei der Befehlsspeicher (336) zum Schreiben von externen Einheiten ansprechbar ist, und durch einen internen Bus (344) über eine Extern-Bus-Steuerungssektion (334) an einen Datenspeicher angeschlossen ist, welcher für die Ausführung des Signal-Verarbeitungsvorgangs verwendet wird;

einem Digitalsignalprozessor (340), welcher jeden der funktionalen Vorgänge in Einheiten von Datenblöcken entsprechend einem in dem Befehlsspeicher (336) gespeicherten Unterprogramm ausführt;

einer Blockbildungseinrichtung, welche einen Signalverarbeitungsblock einer Einheit bildet durch Anfügen von Steuerungsparametern für jeden Datenblock einschließlich der Art des auszuführenden, funktionalen Vorgangs, einer Blockadresse, welche die Position im Zeit- und Raumbereich und die Reihenfolge im Zeit- und Raum-Bereich des Datenblockes angibt und Informationen, welche die Post-Verarbeitungsattribute des Datenblockes angeben;

einer Aktivierungs-Steuerungseinrichtung, welche die Steuerungsparameter untersucht, um die Signalprozessoren (340) zu aktivieren, um jedes Unterprogramm des durch den Parameter angegebenen Funktionsvorgangs auszuführen;

einer Interrupt-Steuerung (345), welche die Zeitsteuerung der Ausführung der Aktivierungs-Steuerungseinrichtung (362, 353, 354) als Reaktion auf einen externen Interrupt steuert;

einer Status-Anzeigeeinrichtung, welche externen Einheiten anzeigt, ob der Funktionsvorgang ausgeführt wird;

einem Daten-Eingangsbus (316), welcher eine Einheit eines Signalverarbeitungsblocks aus einem externen Datenspeicher durch den internen Bus (344) für die Ausführung des Funktionsvorgangs ausliest;

wenigstens einem Doppel-Anschluss-Speicher (349), welcher in der Lage ist, auf beiden Anschlüssen unabhängig zu lesen und zu schreiben, wobei ein Anschluss an den internen Bus (344) angeschlossen ist und so ausgebildet ist, dass er eine Einheit eines Signalverarbeitungsblockes schreibt, welcher aus dem Funktionsvorgang resultiert, und wobei der andere Anschluss zu den externen Einheiten hin geöffnet ist;

und einer Extern-Bussteuerung (334) einschließlich einer Bus-Konkurrenz-Steuerungseinrichtung, welche den internen Bus (344) nur dann an einen gemeinsamen Bus (373) anschließt, welcher aus wenigstens einem Datenbus besteht, der extern vorgesehen ist, wenn der gemeinsame Bus (373) nicht durch ein externes Gerät verwendet wird und eine Datenübertragung für die Einheit eines Signalverarbeitungsblockes oder eine beliebige Datenmenge implementiert;

und einer Übertragungs-Steuerungseinrichtung, welche eine Datenübertragung asynchron in Einheiten eines Signalverarbeitungsblockes durch Verbinden benachbarter Signalprozessoren (340) in einer seriellen und/ oder parallelen Anordnung durch Verbinden des extern geöffneten Anschlusses des Doppel-Anschluss-Speichers (349) in einem Prozessor (340) mit dem Dateneingangsbus (316) des anderen Prozessors ausführt;

einem Eingangs-Vollbild-Puffer eines Doppel-Anschluss-Speichers (349), welcher ein digitales Signal in Blökken bildet und das Signal an einem Anschluss in Einheiten eines Vollbildes oder Blockes auf einer Echtzeitbasis schreibt und die Dateneingabe durch Verbinden eines weiteren Anschlusses mit dem Eingangsbus in dem Signalprozessor (340) in der ersten Stufe in dem Mehrfachprozessor-Modul implementiert;

wenigstens einem gemeinsamen Speicher (371), welcher an den gemeinsamen Bus (373) angeschlossen und so ausgebildet ist, dass er Daten in Einheiten eines Signalverarbeitungsblockes oder eine beliebige Anzahl von Daten mit sämtlichen Signalprozessoren (340) verarbeitet;

einer Aufgaben-Tabelle (372), welche die Statusanzeigeeinrichtung in den digitalen Signalprozessoren (340) speichert;

einer Ausgabesteuerung, welche den zuletzt verarbeiteten Signalverarbeitungsblock ausliest, welcher in den Doppel-Anschluss-Speicher (349) in dem Signalprozessor (340) der letzten Stufe in dem Mehrfachprozessor-Modul geschrieben wurde, den Block entsprechend den Verarbeitungsparametern, um in Übereinstimmung mit der Position im Zeit- und Raumbereich und der Reihenfolge in Zeit- und Raumbereichen neu anordnet, das Neuanordnungsergebnis vorübergehend in einem Pufferspeicher und externen Einheiten des Pufferspeicherinhalts mit einer konstanten Menge pro Zeiteinheit speichert;

einer Datenfluss-Steuerung (370), welche die Inhalte der Aufgaben-Tabelle (372) in einem konstanten Intervall abtastet, die Verarbeitungs-Zuordnungen der Signalprozessoren (340) auf der Basis zurückgegebener Informationen, wie dem Grad der Belegung des Pufferspeichers, welcher durch die Ausgabesteuerung angezeigt wird, bestimmt, und die Interrupt-Steuerung (345) jedes der Signalprozessoren (340) aktiviert; und

einer Schreibeinrichtung, welche die Verarbeitungs-Parameter für jeden neu in den Eingangs-Vollbildpuffer eingegebenen Signalverarbeitungsblock erzeugt und die Parameter an entsprechende Positionen des Eingangs-Vollbildpuffers schreibt.

**2.** Digitalsignal-Verarbeitungsvorrichtung nach Anspruch 1,

bei welcher die Datenfluss-Steuerung (370) eine Beurteilungseinrichtung umfaßt, welche den Verarbeitungsstatus jedes Prozessors durch Abtasten der Aufgaben-Tabelle (372) mit einem konstanten Intervall beurteilt; und eine erste Steuerungseinrichtung, welche auf der Basis des durch die Beurteilungseinrichtung bereitgestellten Ergebnisses bestimmt, ob jedes Signalverarbeitungsmodul einen nächsten Signalverarbeitungsblock verarbeiten kann, und, wenn es möglich ist, ein Interrupt-Signal zu einer Interrupt-Steuerung (345) ausgibt, um eine Verarbeitung auszulösen, oder, wenn es unmöglich ist, ein Signalverarbeitungsmodul anweist, welches eine Verarbeitung ausführen kann, den Signalverarbeitungsblock zu übertragen.

**3.** Digitalsignal-Verarbeitungsvorrichtung nach Anspruch 2,

bei welcher die Beurteilungseinrichtung eine Abtastung ausführt, im Falle einer Parallelverarbeitung in einer konstanten Periode, mit einer Zeitlänge, welche die Eingabeperiode des Signalverarbeitungsblockes ist, multipliziert mit der Anzahl paralleler Verarbeitungen, oder in dem Fall einer seriellen Verarbeitung in einer Zeitlänge, welche die Eingangsperiode ist, dividiert durch eine ganze Zahl größer oder gleich Eins, und eine Übereinstimmung mit der Echtzeit durch Synchronität mit den eingegebenen Daten-Rahmen implementiert.

**4.** Digitalsignal-Verarbeitungsvorrichtung nach Anspruch 1, 2 oder 3,

bei welcher die Datenfluss-Steuerung (370) eine zweite Steuerungseinrichtung beinhaltet, in welcher ein Teil der Bilddaten in kleine rechtwinklige Blöcke aufgeteilt wird, um die Datenblöcke zu bilden, wobei die Größe des Datenblockes gleich einer maximalen oder minimalen Größe ausgeführt wird, welche durch die funktionalen Vorgänge verarbeitet werden, und Positionen kleiner Blöcke in dem Teil der Bilddaten werden als Raum-Positionsinformation der Verarbeitungsparameter verwendet, und, im Falle der Inter-Vollbild-Kodierung eines Bewegtbildes, ist ein Vollbild-Speicher zum Speichern eines kodierten, vorherigen Vollbildes der gemeinsame Speicher (371) und ein durch eine Signalprozessoreinheit verarbeiteter Signalverarbeitungsblock wird in die Position des gemeinsamen Speichers (371) durch den gemeinsamen Bus (373) geschrieben, um dadurch Rückkopplungsdaten zu bilden, und ein neues Vollbild wird durch Herstellen der Referenz zu den Rückkopplungsdaten von einem weiteren Signalverarbeitungsblock durch den gemeinsamen Bus (373) verarbeitet; und eine dritte Steuerungseinrichtung, welche, wenn die Rückkopplungsdaten des vorherigen Vollbildes noch nicht in die Position in dem gemeinsamen Speicher (371) geschrieben wurden, ein Ausführungs-Anhalten für die Verarbeitung vorgibt.

**5.** Digitalsignal-Verarbeitungsvorrichtung nach Anspruch 4,

bei welcher mehrere Digitalsignalprozessoren (340) parallel durch einen lokalen, gemeinsamen Bus (373) verbunden sind, ein lokaler Signalprozessor aus einer lokalen Datenfluss-Steuerung (370) gebildet wird, welche nur eine Verarbeitungs-Aktivierungs-Steuerung für die Digitalsignalprozessoren (340) ausführt, einem lokalen, gemeinsamen Speicher (371), welcher gemeinsam durch die Digitalsignalprozessoren (340) angesprochen werden kann, und mehreren Digitalsignalprozessoren (340), wobei eine Mehrzahl von lokalen Signalprozessoren (340) verbunden sind, um die Signalprozessoren (340) in einem hierarchischen Aufbau zu vervollständigen.

**6.** Digitalsignal-Verarbeitungsvorrichtung nach Anspruch 5,

bei welcher die Anzahl der Mehrfachprozessor-Module Eins ist.

**7.** Digitalsignal-Verarbeitungsvorrichtung nach Anspruch 5,

bei welcher die Anzahl der Mehrfachprozessor-Module größer als Eins ist.

**Revendications**

**1.** Un processeur de signaux numériques comprenant un module multiprocesseur comprenant une pluralité de processeurs de signaux (318) en connexion, chacun desdits processeurs de signaux (318) comprenant une mémoire de programme (336) qui stocke un sous-programme décrivant un processus fonctionnel d'une opération de traitement de signal qui est une combinaison des processus fonctionnels pour des blocs de données constitués d'un grand nombre de données, ladite mémoire de programme (336) étant accessible en écriture à partir d'unités externes et connectée à travers un bus interne (344) via une unité de commande de bus externe (334) avec une mémoire de données qui est utilisée pour l'exécution de ladite opération de traitement de signal ;

un processeur de signaux numériques (340) qui exécute n'importe lequel desdits processus fonctionnels dans des unités de blocs de données suivant un sous-programme stocké dans ladite mémoire de programme (336) ;
un système de formation de bloc qui forme un bloc de traitement de signaux d'une unité en ajoutant, à chaque bloc de données, des paramètres de contrôle comprenant le type de processus fonctionnel à exécuter, une adresse de bloc indiquant la position dans les domaines_temporel et spatial et l'ordre dans les domaines temporel et spatial dudit bloc de données, et des informations indiquant les attributs post-processus dudit bloc de données ;
un contrôleur d'activation qui analyse lesdits paramètres de contrôle pour activer les processeurs de signaux (340) afin d'exécuter chaque sous-programme dudit processus fonctionnel indiqué par ledit paramètre ;
un contrôleur d'interruption (345) qui contrôle le déroulement de l'exécution dudit contrôleur d'activation (352, 353, 354) en réponse à une interruption externe ;
un indicateur d'état qui indique aux unités externes si ledit processus fonctionnel est en cours d'exécution ;
un bus d'entrée de données (316) qui transcrit une unité de bloc de traitement de signaux à partir d'une mémoire de données externe au moyen dudit bus interne (344) pour l'exécution dudit processus fonctionnel ;
au moins une mémoire à deux accès (349) capable de lire et d'écrire indépendamment sur les deux ports, un port étant connecté audit bus interne (344) et adapté pour écrire une unité de bloc de traitement de signaux provenant dudit processus fonctionnel, et l'autre port étant ouvert aux unités externes ;
un contrôleur de bus externe (334) comprenant un contrôleur de conflit d'accès au bus, qui relie ledit bus interne (344) à un bus commun (373) constitué d'au moins un bus de données uniquement en externe lorsque le bus commun (373) n'est pas utilisé par un élément externe et exécutant le transfert de données pour l'unité de bloc de traitement de signaux ou une quantité arbitraire de données ;
un contrôleur de transfert qui exécute des transferts de données en mode asynchrone dans des unités de bloc de traitement de signaux en reliant les unités voisines desdits processeurs de signaux (340) dans un montage en série et/ou en parallèle en connectant le port à ouverture vers l'extérieur de la mémoire à deux accès (349) d'un processeur (340) au dit bus d'entrée de données (316) d'un autre processeur ;
un tampon d'image d'entrée de mémoire à deux accès (349) qui forme un signal numérique dans des blocs et écrit le signal en temps réel sur un port dans des unités d'image ou de bloc, et établit une entrée de données en connectant un autre port au dit bus d'entrée du processeur de signaux primaire (340) dudit module multiprocesseur ;
au moins une mémoire commune (371) qui est connectée au dit bus commun (373) et adaptée pour traiter des données en unités de bloc de traitement de signaux ou un nombre arbitraire de données avec tous lesdits processeurs de signaux (340) ;
un tableau des tâches (372) qui mémorise ledit indicateur d'état dans lesdits processeurs de signaux (340) ;
un contrôleur de sortie qui transcrit le dernier bloc de traitement de signaux traité écrit dans ladite mémoire à deux accès (349) du processeur de signaux terminal (340) dudit module multiprocesseur, réorganise le bloc selon lesdits paramètres de traitement de façon à être en accord avec la position dans les domaines temporel et spatial et l'ordre dans les domaines temporel et spatial, stocke temporairement le résultat de la réorganisation dans une mémoire tampon et des unités externes de la mémoire tampon suivant une quantité constante par unité de temps ;
un contrôleur de flux de données (370) qui balaye le contenu dudit tableau des tâches (372) à intervalles constants, détermine les attributions des processus desdits processeurs de signaux (340) en fonction de données en retour telles que le degré d'occupation de ladite mémoire tampon indiqué par ledit contrôleur de sortie, et active le contrôleur d'interruption (345) de chaque processeur de signaux (340) ; et
un système d'écriture qui rafraîchit lesdits paramètres de traitement pour chaque bloc de traitement de signaux entré récemment dans ledit tampon d'image d'entrée et écrit les paramètres aux positions correspondantes du tampon d'image d'entrée.

2. Un processeur de signaux numériques selon la revendication 1, dans lequel ledit contrôleur de flux de données (370) comprend un système d'évaluation qui évalue l'état de traitement de chaque processeur en balayant ledit tableau des tâches (372) à intervalles constants, et un contrôleur primaire qui détermine, en fonction du résultat fourni par ledit système d'évaluation, si chaque module de traitement de signaux peut traiter le bloc de traitement de signaux suivant et, si possible, émet un signal d'interruption pour ledit contrôleur d'interruption (345) afin de démarrer le traitement ou, si possible, commande au module de traitement de signaux, qui peut être au milieu d'un processus, de transférer ledit bloc de traitement de signaux.

3. Un processeur de signaux numériques selon la revendication 2, dans lequel ledit système d'évaluation exécute un balayage, dans le cas d'un traitement parallèle suivant une période constante, pendant une durée qui est la période d'entrée dudit bloc de traitement de signaux multiplié par le nombre de traitements parallèles, ou, dans le cas d'un traitement en série, pendant une durée qui est la période d'entrée divisée par un entier supérieur ou égal à un, et opère une adaptation en temps réel en étant en synchronisme avec les trames d'entrée.

4. Un processeur de signaux numériques selon la revendication 1, 2 ou 3, dans laquelle ledit contrôleur de flux de données (370) comprend un contrôleur secondaire dans lequel une donnée d'image est divisée en petits blocs rectangulaires pour former lesdits blocs de données, la taille des blocs de données étant fixée à une taille maximale ou minimale gérée par lesdits processus fonctionnels et les positions de petits blocs dans ladite donnée d'image sont utilisées comme information de position spatiale desdits paramètres de traitement, et dans le cas d'un codage inter-trame pour une image mobile, une mémoire d'image pour stocker une image de trames codée précédente est ladite mémoire commune (371) et un bloc de traitement de signaux traite par une unité de processeur de signaux est écrit à une position de la mémoire commune (371) au moyen dudit bus commun (373) pour former des données de retour ; et une nouvelle trame d'image est traitée en faisant référence aux dites données de retour à partir d'un autre bloc de traitement de signaux au moyen du bus commun (373) ; et un contrôleur tertiaire qui, si les données de retour de la trame précédente n'ont pas encore été écrites à la position de la mémoire commune (371), commande une attente d'exécution pour le processus.

5. Un processeur de signaux numériques selon la revendication 4, dans laquelle une multiplicité de processeurs de signaux numériques (340) sont connectés en parallèle à un bus commun local (373), un processeur de signaux locaux est constitué d'un contrôleur de flux de données local (370) qui exécute uniquement un contrôle d'activation de processus pour lesdits processeurs de signaux numériques (340), une mémoire commune locale (371) à laquelle on peut accéder communément par lesdits processeurs de signaux numériques (340), et une multiplicité de processeurs de signaux numériques(340), une multiplicité de processeurs de signaux locaux (340) étant connectés pour former lesdits processeurs de signaux (340) selon une structure hiérarchique.

6. Un processeur de signaux numériques selon la revendication 5, dans laquelle ledit module multiprocesseur est au nombre de un.

7. Un processeur de signaux numériques selon la revendication 5, dans laquelle lesdits modules multiprocesseur sont au nombre de 2 ou plus.

# FIG.1

DATA TRANSFER CONTROLLER

DSP 1

DSP 2

DSP N

BLOCK 1

DATA TRANSFER CONTROLLER

DSP 1

DSP 2

DSP N

BLOCK 2

# FIG.2

( **a** ) DIVISION OF MEMORY AREA

A

B

C

( **b** ) DISTRIBUTION OF NUMBERS OF VALID PIXELS IN EACH AREA

M

VALID PIXELS

EA

EB

EC

AREA

# FIG.3

INPUT TERMINAL (1)

INPUT BUS (4)

VSPM₁ — TIMING CONTROL UNIT (24), INPUT STORAGE (21), PROCESSING UNIT (22), OUTPUT STORAGE (23)

VSPM₂

VSPM N

FEEDBACK BUS (28a)

OUTPUT BUS (5a)

OUTPUT TERMINAL (5)

EP 0 690 377 B1

FIG.4

EP 0 690 377 B1

# FIG. 5

FEED-FORWARD SIGNAL (272)

FEEDBACK SIGNAL (269)

270 — CODING CONTROLLER

CODING CONTROL SIGNAL (271)

273

274

251 — INPUT FRAME BUFFER

252

253 — BLOCK IDENTIFIER

254 — CODER

CODING PARAMETER (255)

256 — VARIABLE-LENGTH CODER

257 — VIDEO MULTIPLEXER

258 — TRANSMISSION BUFFER

INPUT TERMINAL (250)

COMPENSATED PREVIOUS FRAME DATA (268)

260 — LOCAL DECODER

CURRENT FRAME DATA (266)

OUTPUT TERMINAL (259)

265 — MOTION COMPENSATOR

263 — CODING FRAME MEMORY

262 — IN-LOOP FILTER

261

MOTION VECTOR DATA (267)

PREVIOUS CODED FRAME DATA (264)

EP 0 690 377 B1

# FIG. 6

# FIG.7

START

ST1 — INITIALIZE ADDRESS  ( 2 CYCLES )

ST2

PARALLEL OPERATION

PARALLEL OPERATION READ TWO PIECES OF DATA (INCRMENT ADDRESS) COMPUTE TRANSFER RESULT (TO EXTERNAL MEMORY)

$a_i \oplus b_i$ (N+3 CYCLES) OR

$a_i \times b_i$ (N+4 CYCLES)

ST3 — INITIALIZE ADDRESS  ( 2 CYCLES )

ST4 — READ EXTERNAL DATA USELESSLY  ( 2 CYCLES )

ST5

PARALLEL OPERATION

PARALLEL OPERATION READ TWO DATA (INCREMENT ADDRESS) COMPUTE TRANSFER RESULT (TO INTERNAL MEMORY)

$(a_i \oplus b_i) \times c_i$ (N+3 CYCLES) OR

$(a_i \times b_i) \oplus c_i$ (N+2 CYCLES)

TOTAL OF 2N+10 CYCLES

END

# FIG.8

# FIG.14

# FIG. 9

**(B)**                                       **(A)**

SEARCH RANGE S

V

BLOCK

$\underline{yi}$

MINIMAL DISTORTION

$1_1$

$1_2$

INPUT BLOCK $\underline{x}$

EP 0 690 377 B1

# FIG.10

START

**K SAMPLE POINTS**

COMPUTE
DISTORTION : di  — ST11

COMPARISON •
RENEWAL
IF di < D THEN
D = di
AND I = i  — ST 12

END

REPEAT AS MANY TIMES
AS THE NUMBER
OF SEARCH VECTORS

# FIG.11

7 TASK CONTROLLER

8

6 INPUT MEMORY 1

10

9

2 DSP 1

6 INPUT MEMORY 2

10

8

9

2 DSP 2

1

6 INPUT MEMORY 3

10

8

9

2 DSP 3

11 OUTPUT MEMORY

5

# FIG.12

## (a)
DIVIDED PROCESSING
AREA FOR EACH DSP

## (b)
DISTRIBUTION OF VALID
PIXELS FOR EACH DSP

# FIG.13

# FIG. 15

DATA FLOW CONTROL SECTION

COMMON MEMORY

TASK TABLE

PARAMETER MEMORY

INPUT FRAME BUFFER

A/D

PE (0,0)

PE (0,1)

PE (0,n)

OUTPUT CONTROL SECTION

EP 0 690 377 B1

# FIG.16

# FIG.17

CONTROL PARAMETER (302)

DATA FLOW CONTROL SECTION — 301

STARTING INTERRUPTION (317)

STARTING INTERRUP-TION(317)

COMMON MEMORY — 303

TASK CONTROL TABLE — 304

STARTING INTERRUPTION (317)

305

316

STATUS (357)

316

STATUS (357)

305

316

318

318

318

PARAMETER ANALYTICAL OPERATION

351

A 352  B 353  C 354

355

P 349

D

356

PARAMETER ANALYTICAL OPERATION

351

A 352  B 353  C 354

355

P

D

356

355  P 349

D

356

355  349

P

D

356

PARAMETER ANALYTICA OPERATIO

351

A 352  B 353

INPUT DATA (309)

PE

PE

PE

EP 0 690 377 B1

# FIG.18

PARAMETER :

| | |
|---|---|
| BAD | 360 |
| PN = 0 | 361 |
| PFLG | 362 |

PROCESS 1 →

| | |
|---|---|
| BAD | 360 |
| PN = 1 | 361 |
| PFLG | 362 |

PROCESS 2 →

| | |
|---|---|
| BAD | 360 |
| PN = 2 | 361 |
| PFLG | 362 |

- - - →

DATA :

INPUT BLOCK

363

DATA BLOCK
SHOWING THE
RESULT OF PROCESS 1

363

DATA BLOCK
SHOWING THE
RESULT OF PROCESS 2

363

EP 0 690 377 B1

# FIG.19

PROCESS OF
A LARGE BLOCK

PROCESS OF
8 × SMALL BLOCKS =
PROCESS OF
A LARGE BLOCK

# FIG. 20 (I)

LOCAL DATA FLOW CONTROL SECTION

LOCAL COMMON BUS (373)

EXTERNAL BUS CONTROL SECTION

COMMAND MEMORY

DIGITAL SIGNAL PROCESSOR

INTERRUP-TION CON-TROL SECTION

2P-RAM

PARAMETER

DATA

MEMORY FOR WORK

EXTERNAL BUS CONTROL SECTION

COMMAND MEMORY

DIGITAL SIGNAL PROCESSOR

INTERRUP-TION CON-TROL SECTION

2P-RAM

PARAMETER

DATA

MEMORY FOR WORK

EP 0 690 377 B1

FIG. 20 (II)

FIG. 20 (II)

# FIG. 20 (II)

FIG.20 (I)◄──

| LOCAL DATA FLOW CONTROL SECTION | 370 |

371〜 LOCAL COMMON MEMORY | LOCAL TASK TABLE 〜372 | 374

373

375〜

335 COMMAND MEMORY 336

337

338 DIGITAL SIGNAL PROCESSOR | 341 | INTERRUP-TION CON-TROL SECTION 345

340 342

343

334

EXTERNAL BUS CONTROL SECTION

349〜 2P-RAM

333

PARAMETER | 314

314

346

DATA | 315

315

347

MEMORY FOR WORK

344〜

348

FIG.20(I) ◄──

EP 0 690 377 B1

# FIG. 21

# FIG. 22

START

ST31 — INITIAL SETTING OF ADDRESS    ( 4 CYCLES )

ST32 —

PARALLEL OPERATION {

THREE DATA READOUT
(ADDRESS INCREMENT)
ARITHMETICAL
OPERATION
MULTIPLICATION
OUTPUT TRANSFER

( N+3 CYCLES )

END

TOTAL : N+7 CYCLES